# EUROPEAN PATENT SPECIFICATION

(11) **EP 2 600 197 B1**
(45) Date of publication and mention of the grant of the patent: **30.09.2015**
(21) Application number: 12194620.6
(22) Date of filing: 28.11.2012
(51) Int. Cl.: G03G 5/10, G03G 5/05, G03G 5/07, G03G 5/06, G03G 5/147

(54) **Electrophotographic photosensitive member, method of producing electrophotographic photosensitive member, process cartridge, and electrophotographic apparatus**
Elektrofotografisches lichtempfindliches Element, Verfahren zur Herstellung des elektrofotografischen lichtempfindlichen Elements, Prozesskartusche und elektrofotografische Vorrichtung
Élément photosensible électrophotographique, procédé de fabrication de l'élément photosensible électrophotographique, cartouche de traitement et appareil électrophotographique

(30) Priority: 30.11.2011 JP 2011262125; 06.11.2012 JP 2012244528
(43) Date of publication of application: 05.06.2013
(73) Proprietor: Canon Kabushiki Kaisha, Tokyo 146-8501 (JP)
(72) Inventor: Nonaka, Masaki, Tokyo, Tokyo 146-8501 (JP); Nagasaka, Hideaki, "deceased" (JP); Tanaka, Masato, Tokyo, Tokyo 146-8501 (JP)
(74) Representative: TBK

(56) References cited:
- EP-A2- 2 219 080
- JP-A- 2005 062 302
- US-A1- 2011 159 419

## Description

### BACKGROUND OF THE INVENTION

### Field of the Invention

The present invention relates to an electrophotographic photosensitive member, a method of producing the electrophotographic photosensitive member, a process cartridge, and an electrophotographic apparatus.

### Description of the Related Art

In recent years, for the purpose of extending the life and improving image quality of an electrophotographic photosensitive member and increasing the processing speed of an electrophotographic apparatus, it has been desired to improve the mechanical durability (abrasion resistance) of an organic electrophotographic photosensitive member containing an organic photoconductive substance (hereinafter referred to as an "electrophotographic photosensitive member"). In order to improve the mechanical durability, according to one technique, a surface layer of an electrophotographic photosensitive member contains a polymer produced by polymerization of a compound having a polymerizable functional group.

Japanese Patent Laid-Open No. 2000-066425 discloses a technique of improving the abrasion resistance and electric potential stability of an electrophotographic photosensitive member by adding a polymer obtained by polymerizing a charge transporting compound having two or more chain-polymerizable functional groups to the surface layer of the electrophotographic photosensitive member. Japanese Patent Laid-Open No. 2010-156835 discloses a technique of improving the polymerizability of a charge transporting compound having a chain-polymerizable functional group (methacryloyloxy group) by adding a polymer obtained by polymerizing an electron transporting compound having two or more methacryloyloxy groups to the surface layer.

However, if a charge transporting compound having two or more chain-polymerizable functional groups is used, the charge transporting structure is easily distorted in chain polymerization. As a result, high electric potential stability is sometimes not achieved. Accordingly, Japanese Patent Laid-Open No. 2007-241140 discloses a technique of adding, to the surface layer, a polymer obtained by polymerizing a composition including a charge transporting compound having a single chain-polymerizable functional group and a compound that has three or more chain-polymerizable functional groups and that does not have a charge transporting structure. Japanese Patent Laid-Open No. 2009-015306 discloses a technique of achieving high electric potential stability by using a charge transporting compound which has a single chain-polymerizable functional group and in which an alkylene group is inserted between the chain-polymerizable functional group and a charge transporting structure.

However, the following has been found from studies conducted by the inventors of the present invention. That is, in the charge transporting compound having a single chain-polymerizable functional group disclosed in Japanese Patent Laid-Open Nos. 2007-241140 and 2009-015306, the ratio of a chain-polymerizable functional group that contributes to a chain polymerization reaction in one molecule is low, and the probability that a polymerization reaction does not proceed is higher in the charge transporting compound having a single chain-polymerizable functional group than in a charge transporting compound having two or more chain-polymerizable functional groups. Therefore, the residual potential tends to increase.

JP 2005 062302 A discloses a electrophotographic photoreceptor comprising a conductive support body and a photosensitive layer located on the conductive substrate, wherein this photosensitive layer forms a surface of the photoreceptor, this layer forming the surface of the photoreceptor is formed with a cured product of a mixture containing a first charge transport compound having at least an acryloyloxy group or a methacryloyloxy group and a second charge transport compound having a hydroxyl group.

### SUMMARY OF THE INVENTION

The present invention provides an electrophotographic photosensitive member having a surface layer containing a polymer obtainable by polymerization of a compound having a chain-polymerizable functional group. In the electrophotographic photosensitive member, the residual potential is significantly reduced. The present invention also provides a method of producing the electrophotographic photosensitive member. The present invention also provides a process cartridge and an electrophotographic apparatus each including the electrophotographic photosensitive member.

These can be achieved by the present invention described below.

The present invention in its first aspect provides an electrophotographic photosensitive member as specified in claims 1 to 8.

The present invention in its second aspect provides a method of producing an electrophotographic photosensitive member as specified in claims 9 and 10.

The present invention in its third aspect provides a process cartridge as specified in claim 11.

The present invention in its fourth aspect provides an electrophotographic apparatus as specified in claim 12.

The present invention can provide an electrophotographic photosensitive member having a surface layer containing a polymer obtainable by polymerization of a compound having a chain-polymerizable functional group. In the electrophotographic photosensitive member, the residual potential is significantly reduced. The present invention can also provide a method for producing the electrophotographic photosensitive member. The present invention can also provide a process cartridge and an electrophotographic apparatus each including the electrophotographic photosensitive member.

Further features of the present invention will become apparent from the following description of exemplary embodiments with reference to the attached drawings.

### BRIEF DESCRIPTION OF THE DRAWINGS

Figs. 1A and 1B are schematic views each showing an example of a layer structure of an electrophotographic photosensitive member according to an embodiment of the present invention.
Fig. 2 is a schematic view showing an example of an electrophotographic apparatus that includes a process cartridge including an electrophotographic photosensitive member according to an embodiment of the present invention.

### DESCRIPTION OF THE EMBODIMENTS

In an embodiment of the present invention, a surface layer of an electrophotographic photosensitive member includes a polymer obtainable by polymerization of the compound represented by the formula (1).

The inventors of the present invention assume the reason why the electrophotographic photosensitive member according to an embodiment of the present invention is excellent in terms of reduction in a residual potential to be as follows.

The compound represented by the formula (1) is a kind of charge transporting compound having a single chain-polymerizable functional group. The charge transporting compound having a single chain-polymerizable functional group has a relatively high ratio of a charge transporting structure to the chain-polymerizable functional group and tends to provide a stable molecular orientation due to the polymerization with a single chain-polymerizable functional group. Therefore, it can be expected that the polymer of the compound exhibits high electric potential stability.

However, the probability that a polymerization reaction does not proceed is higher in the charge transporting compound having a single chain-polymerizable functional group than in a charge transporting compound having two or more chain-polymerizable functional groups. Therefore, it is believed that uneven polymerization easily occurs in the film depth direction and consequently the residual potential tends to increase. Furthermore, if the degree of freedom of a charge transporting structure is excessively large, microaggregation is easily caused between charge transporting structures. It is also believed that the residual potential increases in a portion in which the density of the charge transporting structures is low after polymerization.

As a result of studies conducted by the inventors of the present invention, it has been found from Japanese Patent Laid-Open No. 2010-156835 that, when a charge transporting compound having a single methacryloyloxy group is used, the polymerization reaction rapidly proceeds and the polymerization efficiency is relatively increased compared with the case where a charge transporting compound having an acryloyloxy group is used. However, it has been found that, because of the increase in the polymerization reaction rate by a methacryloyloxy group, the charge transporting structure causes steric hindrance depending on the size and functional group of the charge transporting structure and thus the polymerization efficiency is prevented from being sufficiently increased or microaggregation is easily caused between the charge transporting structures. It has also been found that the residual potential is not sufficiently reduced only by inserting an alkylene group between the charge transporting structure and the methacryloyloxy group using the technique disclosed in Japanese Patent Laid-Open No. 2009-015306.

As a result of thorough studies conducted by the inventors of the present invention, it has been found that, to reduce the residual potential, an alkylene group between the charge transporting structure and the methacryloyloxy group needs to have an appropriate length in accordance with the skeleton and size of the charge transporting structure. It has also been found that an appropriate substituent group needs to be provided to suppress microaggregation between the charge transporting structures and a decrease in polymerization efficiency.

A surface layer of the electrophotographic photosensitive member according to an embodiment of the present invention includes a polymer obtainable by polymerization of a compound represented by the following formula (1).

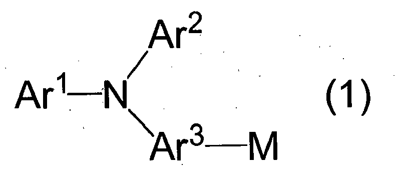

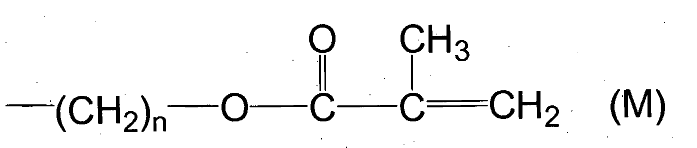

In the formula (1), Ar¹ and Ar² each independently represents a substituted phenyl group. Examples of a substituent group of the substituted phenyl group include a methyl group, an ethyl group, a n-propyl group, a methoxy group, an ethoxy group, and a propoxy group. If the substituent group of the substituted phenyl group is a substituent group other than the above-described substituent groups, such a substituent group causes steric hindrance during a polymerization reaction and the polymerization reaction does not sufficiently proceed. When Ar¹ and Ar² each independently represents an unsubstituted phenyl group, the polymerization efficiency does not decrease, but microaggregation between triphenylamine structures is caused and thus the residual potential is easily increased. Ar³ represents an unsubstituted or substituted phenylene group. Examples of a substituent group of the substituted phenylene group include a methyl group, an ethyl group, a n-propyl group, a methoxy group, an ethoxy group, and a propoxy group. If the substituent group of the substituted phenylene group is a substituent group other than the above-described substituent groups, such a substituent group causes steric hindrance during a polymerization reaction and the polymerization efficiency is decreased.

In the formula (1), M is a group represented by the above formula (M) and, in the formula (M), n represents 3 or 4. When n is 0 or more and 2 or less, the length of an alkylene group is not sufficiently large relative to a triphenylamine structure. Therefore, the charge transporting structure causes steric hindrance due to the increase in the polymerization reaction rate by a methacryloyloxy group and the polymerization efficiency is decreased. As a result, uneven polymerization easily occurs in the film depth direction. When n is an integer number of 5 or more, the degree of freedom of the triphenylamine structure is excessively increased. Therefore, microaggregation between the triphenylamine structures is easily caused and the residual potential is easily increased. Furthermore, if an oxygen atom or a phenylene group is present between the alkylene group and the methacryloyloxy group, cleavage is caused from such an oxygen atom or phenylene group during the polymerization reaction. This easily causes a decrease in the polymerization efficiency and microaggregation between triphenylamine structures, and thus the residual potential is easily increased.

When the surface layer of the electrophotographic photosensitive member is formed, the compounds represented by the formula (1) may be used alone or in combination of two or more.

The compound represented by the formula (1) can be synthesized by, for example, a synthesis method disclosed in Japanese Patent Laid-Open No. 2005-227761. Specific examples of the compounds represented by the formula (1) are described below, but the present invention is not limited thereto. M3 and M4 in the example compounds are each a methacryloyloxy group, which is a specific example of the group represented by the formula (M). Specific structures are described below.

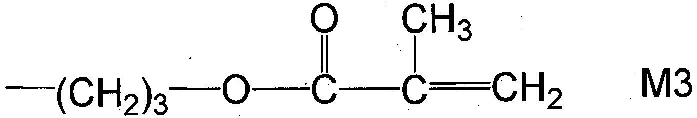

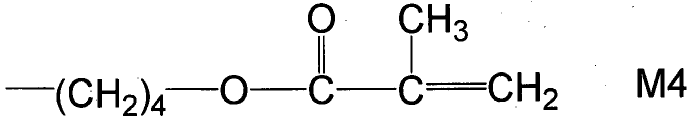

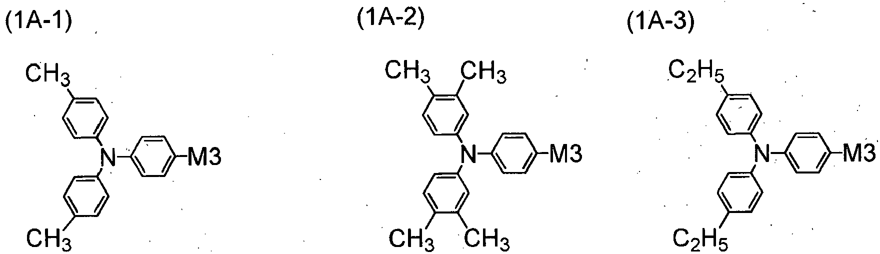

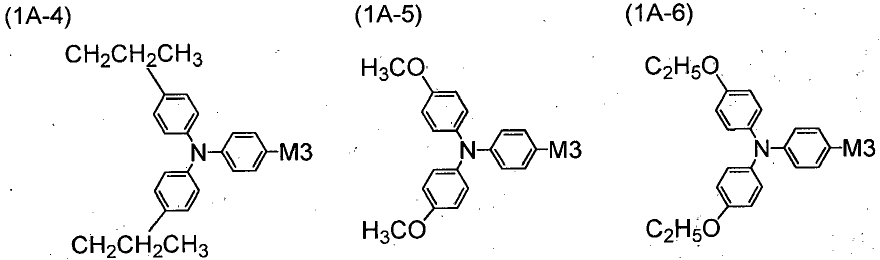

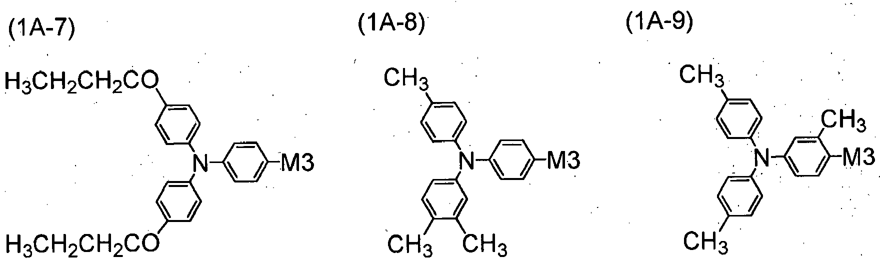

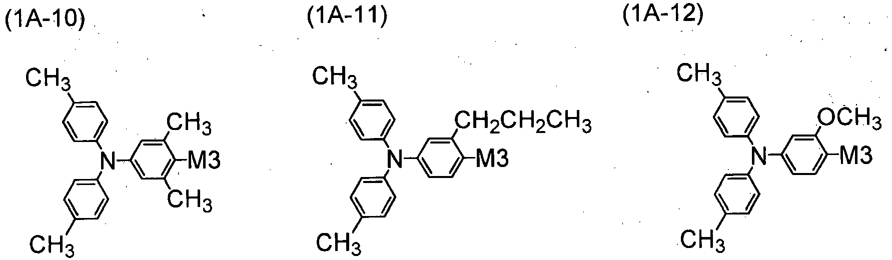

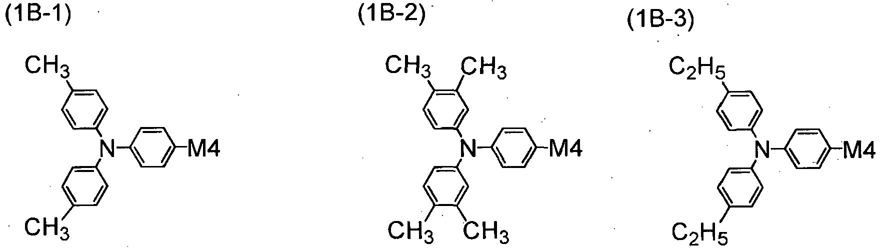

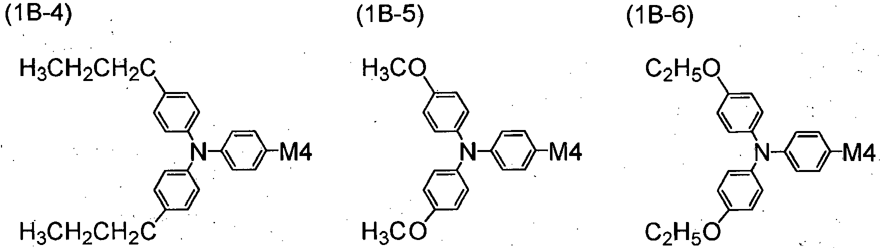

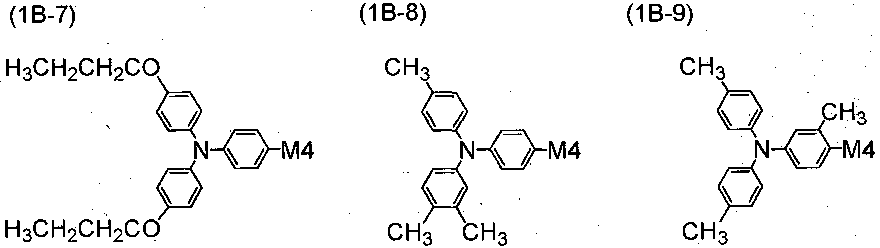

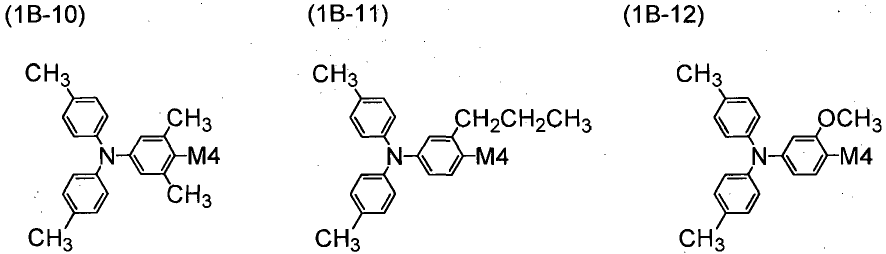

The photosensitive layer may be a monolayer photosensitive layer that contains a charge generating substance and a charge transporting substance or a multilayer (function-separated) photosensitive layer that includes a charge generating layer containing a charge generating substance and a charge transporting layer containing a charge transporting substance. The electrophotographic photosensitive member according to an embodiment of the present invention can have a multilayer photosensitive layer. The charge transporting layer may also have a multilayer structure. The charge transporting layer may be covered with a protective layer.

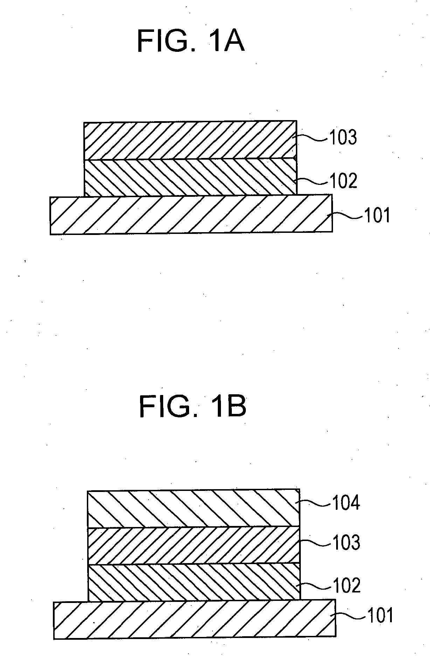

Figs. 1A and 1B are schematic views each showing an example of the layer structure of the electrophotographic photosensitive member according to an embodiment of the present invention. The layer structures in Figs. 1A and 1B include a support 101, a charge generating layer 102, a charge transporting layer 103, and a protective layer (second charge transporting layer) 104. If necessary, an undercoat layer (intermediate layer) may be disposed between the support 101 and the charge generating layer 102. The term "surface layer" of the electrophotographic photosensitive member according to an embodiment of the present invention means an outermost layer. For example, in an electrophotographic photosensitive member having the layer structure shown in Fig. 1A, the surface layer of the electrophotographic photosensitive member is the charge transporting layer 103. In an electrophotographic photosensitive member having the layer structure shown in Fig. 1B, the surface layer of the electrophotographic photosensitive member is the protective layer 104.

The electrophotographic photosensitive member according to an embodiment of the present invention can be produced by a method that includes forming a coat using a surface layer coating solution containing the compound represented by the formula (1) and forming a surface layer by polymerization (chain polymerization) of the compound represented by the formula (1) in the coat.

The polymer contained in the surface layer may be obtainable by polymerization of a composition including the compound represented by the formula (1) and a compound which includes two or more methacryloyloxy groups and does not include a charge transporting structure. To suppress the microaggregation between triphenylamine structures of the compound represented by the formula (1) and reduce the residual potential, a compound (adamantane compound) represented by formula (A) below can be used. To suppress the accumulation of the residual potential caused by a discharge product, a compound represented by formula (B) below and a compound (urea compound) represented by formula (C) below can be used. The adamantane compound and the urea compound can each have two methacryloyloxy groups because the polymerization efficiency of a triphenylamine structure in the formula (1), which exhibits charge transportability, is increased.

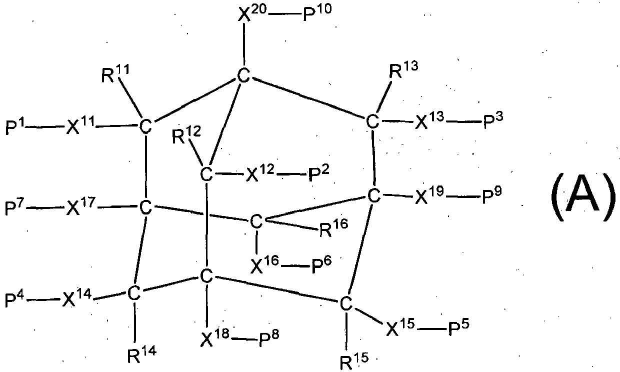

In the formula (A), R¹¹ to R¹⁶ each independently represents a hydrogen atom, a methyl group, an ethyl group, a n-propyl group, a trifluoromethyl group, a hydroxy group, a methoxy group, an ethoxy group, an amino group, a dimethylamino group, a trimethylsilyl group, a fluorine atom, a chlorine atom, or a bromine atom. X¹¹ to X²⁰ each independently represents a single bond or an alkylene group. P¹ to P¹⁰ each independently represents a hydrogen atom, a methyl group, an ethyl group, a n-propyl group, a trifluoromethyl group, a hydroxy group, a methoxy group, an ethoxy group, an amino group, a dimethylamino group, a trimethylsilyl group, a fluorine atom, a chlorine atom, a bromine atom, or a methacryloyloxy group. When X¹¹ is a single bond, P¹ and R¹¹ may combine to form an oxo group (=O). When X¹² is a single bond, P² and R¹² may combine to form an oxo group (=O). When X¹³ is a single bond, P³ and R¹³ may combine to form an oxo group (=0). When X¹⁴ is a single bond, P⁴ and R¹⁴ may combine to form an oxo group (=O). When X¹⁵ is a single bond, P⁵ and R¹⁵ may combine to form an oxo group (=O). When X¹⁶ is a single bond, P⁶ and R¹⁶ may combine to form an oxo group (=O). At least one of P¹ to P¹⁰ is a methacryloyloxy group. When P¹ is a methacryloyloxy group, R¹¹ is a hydrogen atom. When P² is a methacryloyloxy group, R¹² is a hydrogen atom. When P³ is a methacryloyloxy group, R¹³ is a hydrogen atom. When P⁴ is a methacryloyloxy group, R¹⁴ is a hydrogen atom. When P⁵ is a methacryloyloxy group, R¹⁵ is a hydrogen atom. When P⁶ is a methacryloyloxy group, R¹⁶ is a hydrogen atom.

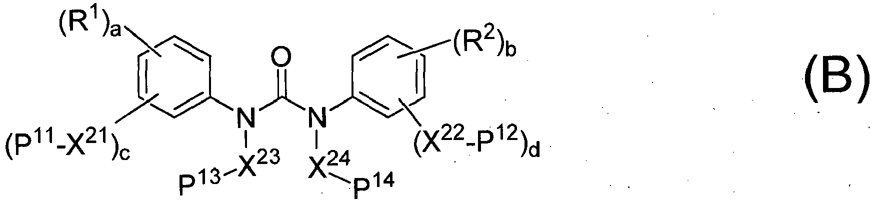

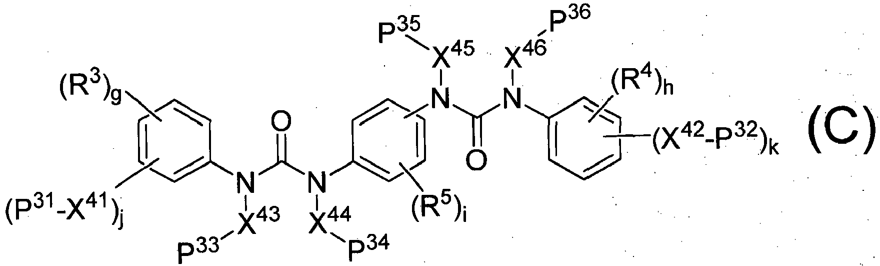

In the formulae (B) and (C), R¹ to R⁵ each independently represents a methyl group, an ethyl group, a n-propyl group, a methoxymethyl group, a trifluoromethyl group, a trichloromethyl group, a methoxy group, an ethoxy group, a propoxy group, a methoxymethoxy group, a trifluoromethoxy group, a trichloromethoxy group, a dimethylamimo group, or a fluorine atom. X²¹ to X²⁴ and X⁴¹ to X⁴⁶ each independently represents an alkylene group. P¹¹ to P¹⁴ and P³¹ to P³⁶ each independently represents a hydrogen atom or a methacryloyloxy group. At least two of P¹¹ to P¹⁴ are methacryloyloxy groups. At least two of P³¹ to P³⁶ are methacryloyloxy groups. Furthermore, a, b, g, and h each independently represents an integer number selected from 0 to 5, i represents an integer number selected from 0 to 4, and c, d, j, and k each independently represents 0 or 1.

The surface layer of the electrophotographic photosensitive member according to an embodiment of the present invention may contain various additive agents. Examples of the additive agents include antidegradants such as antioxidants and ultraviolet absorbers, lubricants such as polytetrafluoroethylene (PTFE) resin fine particles and fluorocarbons, and polymerization control agents such as polymerization initiators and polymerization terminators. The surface layer may contain a compound (urea compound) represented by the following formula (D), (E), or (F), which can suppress the accumulation of residual potential caused by a discharge product.

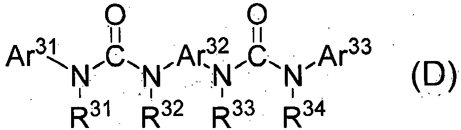

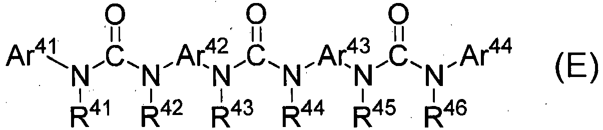

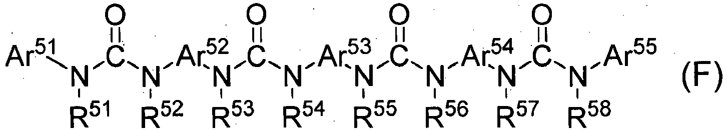

In the formulae (D), (E) and (F), R³¹ to R³⁴, R⁴¹ to R⁴⁶, and R⁵¹ to R⁵⁸ each independently represents an alkyl group. Ar³², Ar⁴² and Ar⁴³, and Ar⁵² to Ar⁵⁴ each independently represents an unsubstituted or substituted arylene group. A substituent group of the substituted arylene group is an alkyl group, an alkoxy-substituted alkyl group, a halogen-substituted alkyl group, an alkoxy group, an alkoxy-substituted alkoxy group, a halogen-substituted alkoxy group, or a halogen atom. Ar³¹, Ar³³, Ar⁴¹, Ar⁴⁴, Ar⁵¹, and Ar⁵⁵ each independently represents an unsubstituted or substituted aryl group or a condensed ring. A substituent group of the substituted aryl group is a carboxyl group, a cyano group, a dialkylamino group, a hydroxy group, an alkyl group, an alkoxy-substituted alkyl group, a halogen-substituted alkyl group, an alkoxy group, an alkoxy-substituted alkoxy group, a halogen-substituted alkoxy group, a nitro group, or a halogen atom.

The surface layer contains at least one compound selected from the group consisting of a compound represented by the following formula (G) and a compound represented by the following formula (H). These compounds can deactivate a large number of radicals derived from a methacryloyloxy group of the compound represented by the formula (1) and control the polymerization reaction between the methacryloyloxy groups. Consequently, uneven polymerization in the film depth direction is suppressed and thus the residual potential can be reduced. From the viewpoint of controlling the polymerization reaction, the amounts of the compound represented by the following formula (G) and the compound represented by the following formula (H) are each 5 ppm or more and 1500 ppm or less, preferably 5 ppm or more and 100 ppm or less, and more preferably 10 ppm or more and 90 ppm or less of the total mass of the polymer.

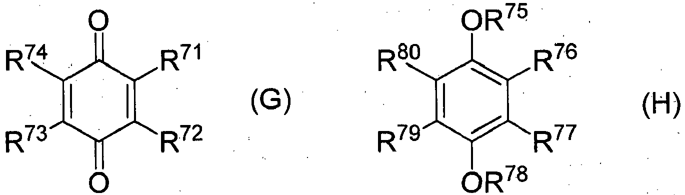

In the formulae (G) and (H), R⁷¹ to R⁷⁴, R⁷⁶, R⁷⁷, R⁷⁹, and R⁸⁰ each independently represents a hydrogen atom, a hydroxy group, an unsubstituted or substituted alkyl group, an unsubstituted or substituted aryl group, or an unsubstituted or substituted alkoxy group. At least one of R⁷¹ and R⁷⁴, at least one of R⁷² and R⁷³, at least one of R⁷⁶ and R⁸⁰, and at least one of R⁷⁷ and R⁷⁹ each independently represents a hydrogen atom, a methyl group, or a hydroxy group. R⁷⁵ and R⁷⁸ each independently represents a hydrogen atom, an unsubstituted or substituted alkyl group, or an unsubstituted or substituted aryl group. At least one of R⁷⁵ and R⁷⁸ is a hydrogen atom. A substituent group of the substituted alkyl group, a substituent group of the substituted aryl group, and a substituent group of the substituted alkoxy group are each a carboxy group, a cyano group, a dialkylamino group, a hydroxy group, an alkyl group, an alkoxy-substituted alkyl group, a halogen-substituted alkyl group, an alkoxy group, an alkoxy-substituted alkoxy group, a halogen-substituted alkoxy group, a nitro group, or a halogen atom.

Examples of the compound represented by the formula (G) include benzoquinones such as p-benzoquinone, 2,6-dimethyl-p-benzoquinone, methyl-p-benzoquinone, and tert-butyl-p-benzoquinone. Examples of the compound represented by the formula (H) include hydroquinone monomethyl ether, hydroquinone, and 2,5-bis(tert-butyl)-1,4-benzenediol.

In the formula (H), R⁷⁵ may be a hydrogen atom, and R⁷⁸ may be a substituted or unsubstituted alkyl group or a substituted or unsubstituted aryl group. Furthermore, R⁷⁸ may be a methyl group and, in particular, may be hydroquinone monomethyl ether.

In the compounds represented by the formulae (A) to (H), examples of the alkyl group include a methyl group, an ethyl group, and a n-propyl group. Examples of the alkylene group include a methylene group, an ethylene group, and a n-propylene group. Examples of the alkoxy-substituted alkyl group include a methoxymethyl group and an ethoxymethyl group. Examples of the halogen-substituted alkyl group include a trifluoromethyl group and a trichloromethyl group. Examples of the alkoxy group include a methoxy group and an ethoxy group. Examples of the alkoxy-substituted alkoxy group include a methoxymethoxy group and an ethoxymethoxy group. Examples of the halogen-substituted alkoxy group include a trifluoromethoxy group and a trichloromethoxy group. Examples of the halogen atom include a fluorine atom, a chlorine atom, and a bromine atom. Examples of the dialkylamino group include a dimethylamino group and a diethylamino group.

Examples of the solvent used for the surface layer coating solution include alcohol solvents such as methanol, ethanol, and propanol; ketone solvents such as acetone, methyl ethyl ketone, and cyclohexanone; ester solvents such as ethyl acetate and butyl acetate; ether solvents such as tetrahydrofuran and dioxane; halogen solvents such as 1,1,2,2,3,3,4-heptafluorocyclopentane, dichloromethane, dichloroethane, and chlorobenzene; aromatic solvents such as benzene, toluene, and xylene; and cellosolve solvents such as methyl cellosolve and ethyl cellosolve. These solvents may be used alone or in combination of two or more.

The structure of the electrophotographic photosensitive member according to an embodiment of the present invention will be described below. Support

A support for use in the electrophotographic photosensitive member according to an embodiment of the present invention is a support having electrical conductivity (electroconductive support), for example, made of aluminum, an aluminum alloy, or stainless steel. An aluminum or aluminum alloy support may be an ED tube, an EI tube, or a support manufactured by cutting, electrochemical mechanical polishing, or wet or dry honing of the ED or EI tube. A metal support or a resin support may be covered with a thin film made of an electroconductive material such as aluminum, an aluminum alloy, or an indium oxide-tin oxide alloy. The surface of the support may be subjected to cutting, surface roughening, or alumite treatment.

The support for use in the electrophotographic photosensitive member may be a support obtained by impregnating a resin with electroconductive particles such as carbon black, tin oxide particles, titanium oxide particles, or silver particles. The support may also be a plastic containing an electroconductive binder resin.

In the electrophotographic photosensitive member according to an embodiment of the present invention, an electroconductive layer containing electroconductive particles and a resin may be formed on the support. In a method for forming an electroconductive layer containing electroconductive particles and a resin on the support, the electroconductive layer contains a powder containing electroconductive particles. Examples of the electroconductive particles include carbon black; acetylene black; powders of metals such as aluminum, nickel, iron, nichrome, copper, zinc, and silver; and powders of metal oxides such as electroconductive tin oxide and indium-tin oxide (ITO).

Examples of the resin for use in the electroconductive layer include acrylic resin, alkyd resin, epoxy resin, phenolic resin, butyral resin, polyacetal resin, polyurethane, polyester, polycarbonate, and melamine resin.

Examples of the solvent for use in an electroconductive layer coating solution include ether solvents, alcohol solvents, ketone solvents, and aromatic hydrocarbon solvents. The thickness of the electroconductive layer is preferably 0.2 µm or more and 40 µm or less and more preferably 5 µm or more and 40 µm or less.

The electrophotographic photosensitive member according to an embodiment of the present invention may include an undercoat layer between the support or the electroconductive layer and the photosensitive layer. The undercoat layer can be formed by applying an undercoat layer coating solution containing a resin onto the support or the electroconductive layer and drying or hardening the undercoat layer coating solution.

Examples of the resin for use in the undercoat layer include polyacrylic acid, methylcellulose, ethylcellulose, polyamide resin, polyimide resin, polyamide-imide resin, polyamic acid resin, melamine resin, epoxy resin, and polyurethane resin. The undercoat layer can contain the electroconductive particles described above.

Examples of the solvent for use in the undercoat layer coating solution include ether solvents, alcohol solvents, ketone solvents, and aromatic hydrocarbon solvents. The thickness of the undercoat layer is preferably 0.05 µm or more and 40 µm or less and more preferably 0.4 to 20 µm. The undercoat layer may contain semiconductive particles, an electron transporting substance, or an electron accepting substance. Photosensitive Layer

In the electrophotographic photosensitive member according to an embodiment of the present invention, a photosensitive layer (charge generating layer, charge transporting layer) is formed on the support, the electroconductive layer, or the undercoat layer.

Examples of a charge generating substance for use in the electrophotographic photosensitive member according to an embodiment of the present invention include pyrylium, thiapyrylium dyes, phthalocyanine compounds, anthanthrone pigments, dibenzpyrenequinone pigments, pyranthrone pigments, azo pigments, indigo pigments, quinacridone pigments, and quinocyanine pigments. The charge generating substance can be gallium phthalocyanine. Hydroxy gallium phthalocyanine crystals having strong peaks at Bragg angles 2θ of 7.4° ± 0.3° and 28.2° ± 0.3° in CuKα characteristic X-ray diffraction can be particularly used in terms of high sensitivity.

The charge generating layer can be formed by applying a charge generating layer coating solution and drying the charge generating layer coating solution. The charge generating layer coating solution is prepared by dispersing a charge generating substance together with a binder resin and a solvent. The charge generating layer may also be an evaporated film made of a charge generating substance.

Examples of a binder resin for use in a charge generating layer of a multilayer photosensitive layer according to an embodiment of the present invention include polycarbonate resin, polyester resin, butyral resin, polyvinyl acetal resin, acrylic resin, vinyl acetate resin, and urea resin. The binder resin can be particularly a butyral resin. These resins can be used alone or in combination of two or more as a mixture or a copolymer.

In the charge generating layer, the content of the binder resin can be 0.3 parts or more by mass and 4 parts or less by mass relative to 1 part by mass of the charge generating substance. The dispersion may be performed with a homogenizer, ultrasonic waves, a ball mill, a sand mill, an attritor, or a roll mill.

Examples of a solvent for use in the charge generating layer coating solution include alcohol solvents, sulfoxide solvents, ketone solvents, ether solvents, ester solvents, and aromatic hydrocarbon solvents. The thickness of the charge generating layer is preferably 0.01 µm or more and 5 µm or less and more preferably 0.1 µm or more and 1 µm or less. The charge generating layer may optionally contain various additive agents such as a sensitizer, an antioxidant, an ultraviolet absorber, and a plasticizer.

In an electrophotographic photosensitive member having a multilayer photosensitive layer, a charge transporting layer is formed on a charge generating layer. In the case where the charge transporting layer is the surface layer as shown in Fig. 1A, the charge transporting layer can be formed by forming a coat by the use of a charge transporting layer coating solution that contains the compound represented by the formula (1) dissolved in a solvent and polymerizing (chain-polymerizing) the compound represented by the formula (1) in the coat. In the case where the protective layer is the surface layer as shown in Fig. 1B, the charge transporting layer can be formed by forming a coat by the use of a charge transporting layer coating solution that contains a charge transporting substance and a binder resin dissolved in a solvent and drying the coat.

In the case where the protective layer is the surface layer as shown in Fig. 1B, examples of the charge transporting substance for use in the charge transporting layer include triarylamine compounds, hydrazone compounds, stilbene compounds, pyrazoline compounds, oxazole compounds, thiazole compounds, and triallylmethane compounds.

In the case where the protective layer is the surface layer as shown in Fig. 1B, examples of the binder resin for use in the charge transporting layer include polyvinyl butyral resin, polyarylate resin, polycarbonate resin, polyester resin, phenoxy resin, polyvinyl acetate resin, acrylic resin, polyacrylamide resin, polyamide resin, polyvinylpyridine, cellulose resin, urethane resin, epoxy resin, agarose resin, casein, polyvinyl alcohol resin, and polyvinylpyrrolidone.

In the case where the protective layer is the surface layer as shown in Fig. 1B, the ratio of the charge transporting substance can be 30% or more by mass and 70% or less by mass relative to the total mass of the charge transporting layer.

In the case where the protective layer is the surface layer as shown in Fig. 1B, examples of the solvent for use in the charge transporting layer coating solution include ether solvents, alcohol solvents, ketone solvents, and aromatic hydrocarbon solvents. The thickness of the charge transporting layer can be 5 µm or more and 40 µm or less.

According to an embodiment of the present invention, a protective layer may be formed on the charge transporting layer. The protective layer can be formed by forming a coat by the use of a protective layer coating solution that contains the compound represented by the formula (1) dissolved in a solvent and polymerizing (chain-polymerizing) the compound represented by the formula (1) in the coat.

In the case where the protective layer contains a compound that has a methacryloyloxy group but does not have charge transporting function, the ratio of the compound represented by the formula (1) can be 50% or more by mass and less than 100% by mass relative to the total solid content of the protective layer coating solution.

The thickness of the protective layer can be 2 µm or more and 20 µm or less.

These coating solutions can be applied by, for example, dip coating (dipping), spray coating, spinner coating, bead coating, blade coating, or beam coating.

A polymerization reaction in the formation of the surface layer will be described below. A compound having a chain-polymerizable functional group (methacryloyloxy group) can be polymerized utilizing heat, light (e.g., ultraviolet rays), or radiant rays (e.g., an electron beam). Such a compound can be polymerized utilizing radiant rays, in particular, an electron beam.

Polymerization utilizing an electron beam can produce a three-dimensional network structure having a significantly high density and achieve high electric potential stability. Since the polymerization utilizing an electron beam proceeds efficiently and is completed within a short time, the productivity is high. In the case of irradiation with an electron beam, an accelerator of a scanning type, an electrocurtain type, a broad beam type, a pulse type, or a laminar type may be used.

The irradiation with an electron beam is performed under the following conditions. According to an embodiment of the present invention, when the accelerating voltage of an electron beam is 120 kV or less, the electron beam does not cause a significant deterioration of material properties while the polymerization efficiency is maintained. The electron beam absorbed dose to the surface of an electrophotographic photosensitive member is preferably 5 kGy or more and 50 kGy or less and more preferably 1 kGy or more and 10 kGy or less.

When a compound having a chain-polymerizable functional group according to an embodiment of the present invention is polymerized utilizing an electron beam, irradiation with an electron beam is performed in an inert gas atmosphere and then heating is performed in an inert gas atmosphere in order to prevent oxygen from inhibiting the polymerization. Examples of the inert gas include nitrogen, argon, and helium.

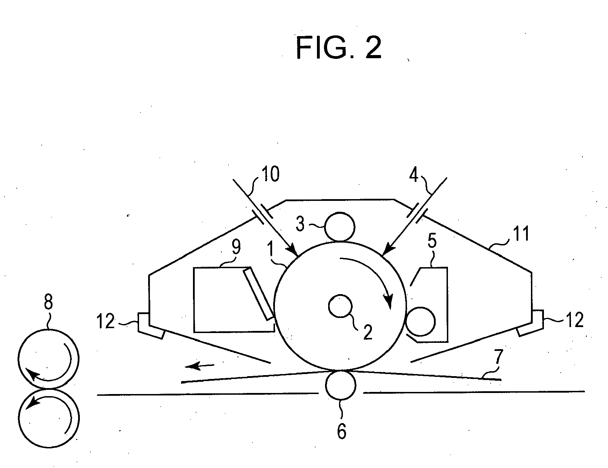

Fig. 2 is a schematic view showing an example of an electrophotographic apparatus that includes a process cartridge including the electrophotographic photosensitive member according to an embodiment of the present invention.

In Fig. 2, a drum-type electrophotographic photosensitive member 1 according to an embodiment of the present invention is rotated around a shaft 2 in the direction indicated by an arrow at a predetermined peripheral speed (process speed). During the rotation, the peripheral surface of the electrophotographic photosensitive member 1 is uniformly positively or negatively charged at a predetermined potential by charging means (primary charging means) 3. The electrophotographic photosensitive member 1 is then irradiated with intensity-modulated exposure light 4 emitted from exposure means (not shown) such as a slit exposure device or a laser beam scanning exposure device, in response to the time-series electric digital image signals of intended image information. Thus, electrostatic latent images corresponding to the intended image information are successively formed on the surface of the electrophotographic photosensitive member 1.

The electrostatic latent images are then subjected to normal or reversal development with a toner in developing means 5 and are made visible as toner images. The toner images formed on the surface of the electrophotographic photosensitive member 1 are successively transferred onto a transfer member 7 by transferring means 6. The transfer member 7 taken from a paper feeder (not shown) in synchronism with the rotation of the electrophotographic photosensitive member 1 is fed between the electrophotographic photosensitive member 1 and the transferring means 6. A bias voltage having polarity opposite to the polarity of the electric charge of the toner is applied to the transferring means 6 from a bias power supply (not shown). The transferring means may be intermediate transfer means that includes a primary transfer member, an intermediate transfer member, and a secondary transfer member.

The transfer member 7 onto which toner images have been transferred is then separated from the surface of the electrophotographic photosensitive member 1 and is conveyed to fixing means 8. After the toner images are fixed, the transfer member 7 is output from the electrophotographic apparatus as an image-formed article (such as a print or a copy).

The surface of the electrophotographic photosensitive member 1 after the toner images have been transferred is cleaned by removing deposits such as residual toner with cleaning means 9. The residual toner may be recovered with a developing device or the like. If necessary, the electricity is removed with pre-exposure light 10 from pre-exposure means (not shown), and the electrophotographic photosensitive member 1 is repeatedly used for image forming. In the case where the charging means 3 is contact charging means such as a charging roller, pre-exposure is not necessarily required.

According to an embodiment of the present invention, a plurality of components selected from the electrophotographic photosensitive member 1, the charging means 3, the developing means 5, the transferring means 6, and the cleaning means 9 may be incorporated in a container to provide a process cartridge. The process cartridge may be detachably attachable to the main body of an electrophotographic apparatus such as a copying machine or a laser-beam printer. For example, at least one means selected from the group consisting of the charging means 3, the developing means 5, the transferring means 6, and the cleaning means 9 may be integrally supported together with the electrophotographic photosensitive member 1 to provide a process cartridge 11, which is detachably attachable to the main body of an electrophotographic apparatus using guide means 12 such as a rail of the main body.

### EXAMPLES

The present invention will now be further described in detail based on Examples and Comparative Examples. In EXAMPLES, "part" means "part by mass".

### Example 1

An aluminum cylinder having a diameter of 30 mm, a length of 357.5 mm, and a thickness of 1 mm was used as a support (electroconductive support).

Next, 50 parts of titanium oxide particles covered with tin oxide containing 10% antimony oxide (trade name: ECT-62, manufactured by Titan Kogyo, Ltd.), 25 parts of resole phenolic resin (trade name: Phenolite J-325 manufactured by Dainippon Ink and Chemicals, Inc., solid content: 70% by mass), 20 parts of methyl cellosolve, 5 parts of methanol, and 0.002 parts of silicone oil (polydimethylsiloxane-polyoxyalkylene copolymer having an average molecular weight of 3000) were dispersed for two hours with a sand mill using glass beads having a diameter of 0.8 mm to prepare an electroconductive layer coating solution.

The electroconductive layer coating solution was applied onto the support by dip coating and dried at 140°C for 30 minutes to form an electroconductive layer having a thickness of 15 µm.

Subsequently, 2.5 parts of nylon 6-66-610-12 quaterpolymer resin (trade name: CM8000 manufactured by Toray Industries, Inc.) and 7.5 parts of N-methoxymethylated 6 nylon resin (trade name: Toresin EF-30T manufactured by Nagase ChemteX Corporation) were dissolved in a mixed solvent of 100 parts of methanol and 90 parts of butanol to prepare an undercoat layer coating solution.

The undercoat layer coating solution was applied onto the electroconductive layer by dip coating and dried at 100°C for 10 minutes to form an undercoat layer having a thickness of 0.7 µm.

Subsequently, 11 parts of hydroxy gallium phthalocyanine crystal (charge generating substance) was prepared. The crystal had strong peaks at Bragg angles (2θ ± 0.2°) of 7.4° and 28.2° in CuKα characteristic X-ray diffraction. Then, 5 parts of polyvinyl butyral resin (trade name: S-LEC BX-1 manufactured by Sekisui Chemical Co., Ltd.) and 130 parts of cyclohexanone were added thereto, and the mixture was dispersed together with 500 parts of glass beads having a diameter of 1 mm at 1800 rpm for two hours while the mixture was cooled with cooling water at 18°C. After the dispersion, the mixture was diluted with 300 parts of ethyl acetate and 160 parts of cyclohexanone to prepare a charge generating layer coating solution.

The average particle size (median) of the hydroxy gallium phthalocyanine crystal in the charge generating layer coating solution was 0.18 µm as measured with a centrifugal particle size analyzer (trade name: CAPA 700) manufactured by Horiba, Ltd., the principle of which is based on liquid phase sedimentation.

The charge generating layer coating solution was applied onto the undercoat layer by dip coating and dried at 110°C for 10 minutes to form a charge generating layer having a thickness of 0.17 µm.

Next, 5 parts of a compound (charge transporting substance) represented by the following formula (2), 5 parts of a compound (charge transporting substance) represented by the following formula (3), and 10 parts of polycarbonate resin (trade name: Iupilon Z400 manufactured by Mitsubishi Gas Chemical Co., Inc.) were dissolved in a mixed solvent of 70 parts of monochlorobenzene and 30 parts of dimethoxymethane to prepare a charge transporting layer coating solution.

The charge transporting layer coating solution was applied onto the charge generating layer by dip coating and dried at 100°C for 30 minutes to form a charge transporting layer having a thickness of 18 µm.

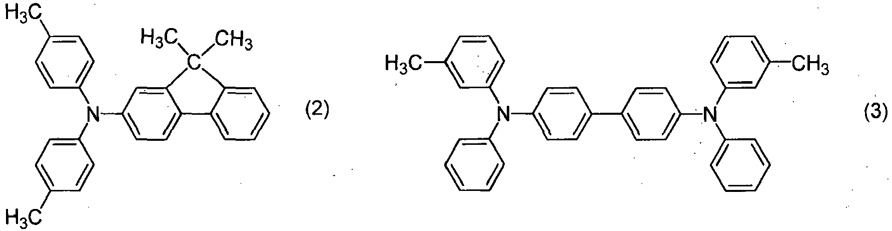

Next, 80 parts of the example compound (1A-1) serving as the compound represented by the formula (1), 20 parts of trimethylolpropane trimethacrylate (trade name: Miramer M301 manufactured by TOYO CHEMICALS CO., LTD.), and 0.005 parts of hydroquinone monomethyl ether (manufactured by TOKYO CHEMICAL INDUSTRY Co., Ltd.) were dissolved in 100 parts of n-propanol. Furthermore, 100 parts of 1,1,2,2,3,3,4-heptafluorocyclopentane (trade name: ZEORORA H manufactured by ZEON CORPORATION) was added to the mixture to prepare a protective layer coating solution.

The protective layer coating solution was applied onto the charge transporting layer by dip coating, and the resulting film was heat-treated at 50°C for five minutes. The film was then irradiated with an electron beam for 1.6 seconds in a nitrogen atmosphere at an accelerating voltage of 70 kV and an absorbed dose of 50000 Gy. The film was then heat-treated for 30 seconds in a nitrogen atmosphere under the condition that the temperature of the film was 130°C. The processes from the electron beam irradiation to the 30-second heat treatment were performed at an oxygen concentration of 19 ppm. Thus, a protective layer having a thickness of 5 µm was formed.

Accordingly, an electrophotographic photosensitive member was produced. The electrophotographic photosensitive member included the support, the electroconductive layer, the undercoat layer, the charge generating layer, the charge transporting layer, and the protective layer. The protective layer was the surface layer.

### Examples 2 to 5 and 7 to 9

An electrophotographic photosensitive member was produced in the same manner as in Example 1, except that the protective layer coating solution was prepared using an example compound listed in Table 1 as the compound represented by the formula (1).

### Example 6

An electrophotographic photosensitive member was produced in the same manner as in Example 1, except that the protective layer coating solution was prepared using a mixture of 40 parts of the example compound (1A-1) and 40 parts of the example compound (1A-2) as the compound represented by the formula (1).

### Examples 10 and 11

An electrophotographic photosensitive member was produced in the same manner as in Example 1, except that the protective layer coating solution was prepared using an example compound listed in Table 1 as the compound represented by the formula (1) without using trimethylolpropane trimethacrylate.

### Examples 12 and 13

An electrophotographic photosensitive member was produced in the same manner as in Example 1, except that the protective layer coating solution was prepared using trimethylolpropane triacrylate (trade name: Miramer M300, manufactured by TOYO CHEMICALS CO., LTD.) instead of trimethylolpropane trimethacrylate and using an example compound listed in Table 1 as the compound represented by the formula (1).

### Examples 14 and 15

An electrophotographic photosensitive member was produced in the same manner as in Example 1, except that the protective layer coating solution was prepared using a compound represented by formula (A-1) below instead of trimethylolpropane trimethacrylate and using an example compound listed in Table 1 as the compound represented by the formula (1).

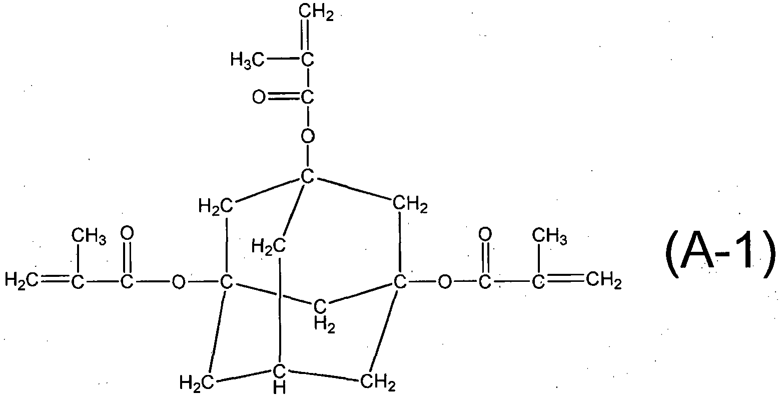

### Example 16

An electrophotographic photosensitive member was produced in the same manner as in Example 1, except that the protective layer coating solution was prepared using a compound represented by formula (A-2) below instead of trimethylolpropane trimethacrylate and using an example compound listed in Table 1 as the compound represented by the formula (1).

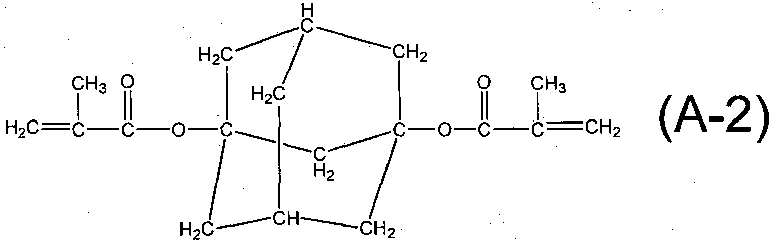

### Example 17

An electrophotographic photosensitive member was produced in the same manner as in Example 16, except that the protective layer coating solution was prepared by changing the amount of the example compound (1A-1) from 80 parts to 60 parts and changing the amount of the compound represented by the formula (A-2) from 20 parts to 40 parts.

### Example 18

An electrophotographic photosensitive member was produced in the same manner as in Example 16, except that the protective layer coating solution was prepared by changing the amount of the example compound (1A-1) from 80 parts to 40 parts and changing the amount of the compound represented by the formula (A-2) from 20 parts to 60 parts.

### Example 19

An electrophotographic photosensitive member was produced in the same manner as in Example 16, except that the protective layer coating solution was prepared using an example compound listed in Table 1 as the compound represented by the formula (1).

### Examples 20 and 21

An electrophotographic photosensitive member was produced in the same manner as in Example 1, except that the protective layer coating solution was prepared using a compound represented by formula (B-1) below instead of trimethylolpropane trimethacrylate and using an example compound listed in Table 1 as the compound represented by the formula (1).

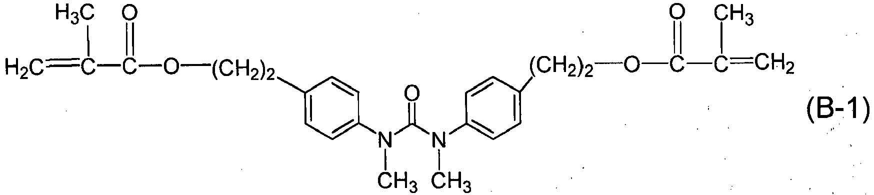

### Examples 22 and 23

An electrophotographic photosensitive member was produced in the same manner as in Example 1, except that the protective layer coating solution was prepared using a compound represented by formula (C-1) below instead of trimethylolpropane trimethacrylate and using an example compound listed in Table 1 as the compound represented by the formula (1).

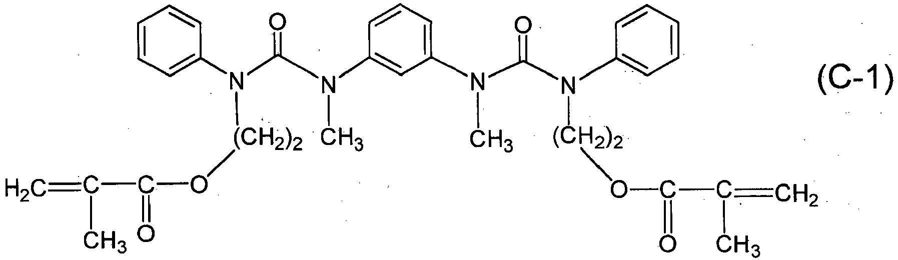

### Example 24

An electrophotographic photosensitive member was produced in the same manner as in Example 1, except that the protective layer coating solution was prepared by changing the amount of the example compound (1A-1) from 80 parts to 75 parts and adding 5 parts of a compound represented by formula (D-1) below.

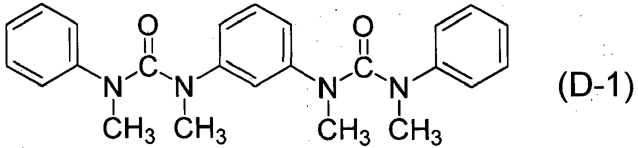

### Example 25

An electrophotographic photosensitive member was produced in the same manner as in Example 24, except that the protective layer coating solution was prepared using an example compound listed in Table 1 as the compound represented by the formula (1).

### Example 26

An electrophotographic photosensitive member was produced in the same manner as in Example 1 except for the following. The protective layer coating solution in Example 1 was changed to a protective layer coating solution prepared by dissolving 80 parts of the example compound (1A-1), 20 parts of trimethylolpropane trimethacrylate (trade name: Miramer M301 manufactured by TOYO CHEMICALS CO., LTD.), 0.005 parts of hydroquinone monomethyl ether (manufactured by TOKYO CHEMICAL INDUSTRY Co., Ltd.), and 1 part of 1-hydroxycyclohexyl phenyl ketone (trade name: Irgacure 184 manufactured by Ciba Specialty Chemicals) in 100 parts of n-propanol and furthermore adding 100 parts of 1,1,2,2,3,3,4-heptafluorocyclopentane (trade name: ZEORORA H manufactured by ZEON CORPORATION) thereto. The protective layer coating solution was applied onto the charge transporting layer by dip coating, and the resulting film was heat-treated at 50°C for five minutes, irradiated with light from a metal halide lamp for 20 seconds at an irradiation intensity of 500 mW/cm², and then heat-treated for 30 minutes under the condition that the temperature of the film was 130°C to form a protective layer having a thickness of 5 µm.

### Example 27

An electrophotographic photosensitive member was produced in the same manner as in Example 26, except that the protective layer coating solution was prepared using an example compound listed in Table 1 as the compound represented by the formula (1).

### Example 28

An electrophotographic photosensitive member was produced in the same manner as in Example 1, except that the protective layer was formed by performing irradiation with an electron beam for 1.6 seconds in a nitrogen atmosphere at an accelerating voltage of 50 kV and an absorbed dose of 5000 Gy.

### Example 29

An electrophotographic photosensitive member was produced in the same manner as in Example 28, except that the protective layer coating solution was prepared using an example compound listed in Table 1 as the compound represented by the formula (1).

### Example 30

In Example 1, the protective layer was not formed and the charge transporting layer coating solution was changed to a charge transporting layer coating solution prepared by dissolving 80 parts of the example compound (1A-1), 20 parts of trimethylolpropane trimethacrylate (trade name: Miramer M301 manufactured by TOYO CHEMICALS CO., LTD.), and 0.005 parts of hydroquinone monomethyl ether (manufactured by TOKYO CHEMICAL INDUSTRY Co., Ltd.) in 100 parts of n-propanol and furthermore adding 100 parts of 1,1,2,2,3,3,4-heptafluorocyclopentane (trade name: ZEORORA H manufactured by ZEON CORPORATION) thereto. The charge transporting layer coating solution was applied onto the charge generating layer by dip coating, and the resulting film was heat-treated at 50°C for five minutes. The film was then irradiated with an electron beam for 1.6 seconds in a nitrogen atmosphere at an accelerating voltage of 70 kV and an absorbed dose of 50000 Gy. The film was then heat-treated for 30 seconds in a nitrogen atmosphere under the condition that the temperature of the film was 130°C. The processes from the electron beam irradiation to the 30-second heat treatment were performed at an oxygen concentration of 19 ppm. Thus, a charge transporting layer having a thickness of 10 µm was formed. Accordingly, an electrophotographic photosensitive member which included the support, the electroconductive layer, the undercoat layer, the charge generating layer, and the charge transporting layer and in which the charge transporting layer was the surface layer was produced.

### Example 31

An electrophotographic photosensitive member was produced in the same manner as in Example 30, except that the charge transporting layer coating solution was prepared using an example compound listed in Table 1 as the compound represented by the formula (1).

### Comparative Examples 32 and 33

An electrophotographic photosensitive member was produced in the same manner as in Example 1, except that the protective layer coating solution was prepared using an example compound listed in Table 1 as the compound represented by the formula (1) without using hydroquinone monomethyl ether.

### Example 34

An electrophotographic photosensitive member was produced in the same manner as in Example 1, except that the protective layer coating solution was prepared by changing the amount of hydroquinone monomethyl ether from 0.005 parts to 0.15 parts.

### Comparative Examples

The following comparative compounds (R-1) to (R-15) were used as comparative compounds of the compound represented by the formula (1).

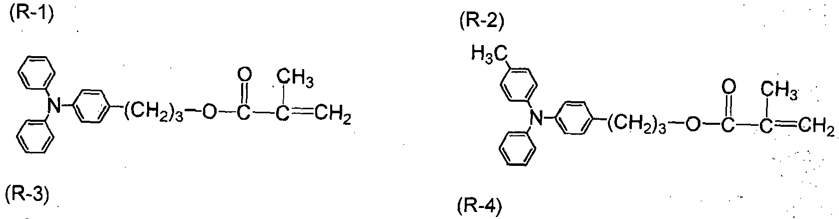

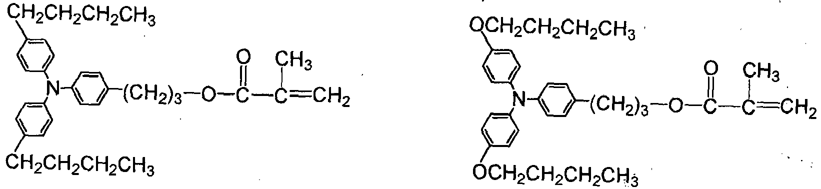

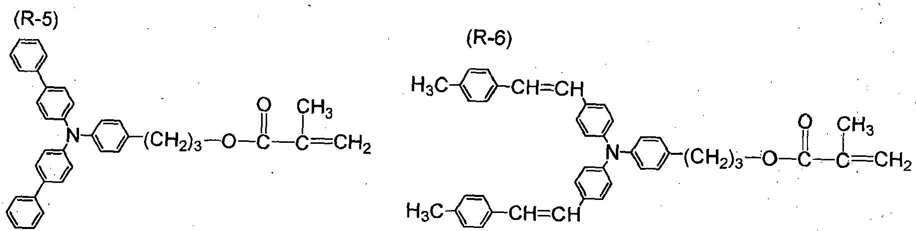

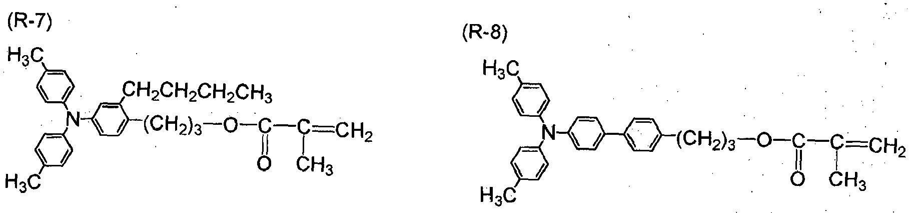

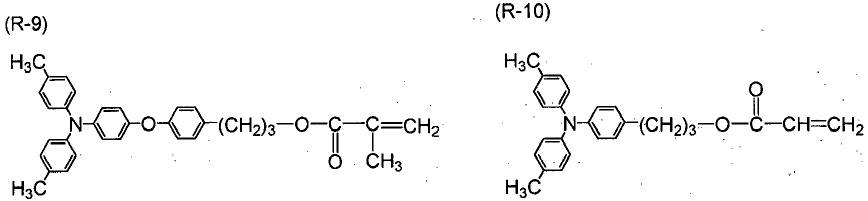

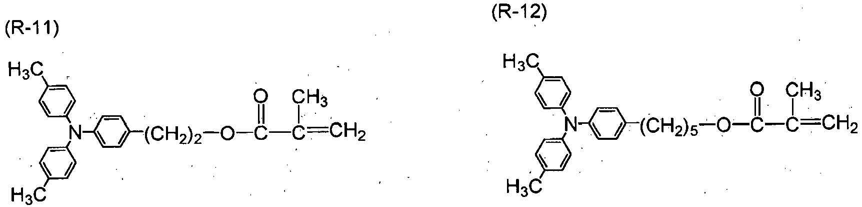

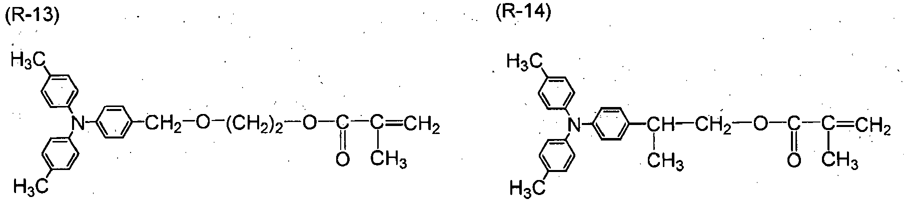

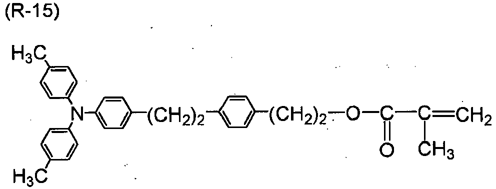

### Comparative Examples 1 to 15

An electrophotographic photosensitive member was produced in the same manner as in Example 1, except that the protective layer coating solution was prepared using a comparative compound listed in Table 1 as the compound represented by the formula (1) without using hydroquinone monomethyl ether.

### Comparative Examples 16 and 17

An electrophotographic photosensitive member was produced in the same manner as in Example 10, except that the protective layer coating solution was prepared using a comparative compound listed in Table 1 as the compound represented by the formula (1) without using hydroquinone monomethyl ether.

### Comparative Examples 18 and 19

An electrophotographic photosensitive member was produced in the same manner as in Example 12, except that the protective layer coating solution was prepared using a comparative compound listed in Table 1 as the compound represented by the formula (1) without using hydroquinone monomethyl ether.

### Comparative Examples 20 and 21

An electrophotographic photosensitive member was produced in the same manner as in Example 14, except that the protective layer coating solution was prepared using a comparative compound listed in Table 1 as the compound represented by the formula (1) without using hydroquinone monomethyl ether.

### Comparative Examples 22 and 23

An electrophotographic photosensitive member was produced in the same manner as in Example 16, except that the protective layer coating solution was prepared using a comparative compound listed in Table 1 as the compound represented by the formula (1) without using hydroquinone monomethyl ether.

### Comparative Examples 24 and 25

An electrophotographic photosensitive member was produced in the same manner as in Example 20, except that the protective layer coating solution was prepared using a comparative compound listed in Table 1 as the compound represented by the formula (1) without using hydroquinone monomethyl ether.

### Comparative Examples 26 and 27

An electrophotographic photosensitive member was produced in the same manner as in Example 32, except that the protective layer coating solution was prepared using a comparative compound listed in Table 1 as the compound represented by the formula (1).

### Comparative Examples 28 and 29

An electrophotographic photosensitive member was produced in the same manner as in Example 30, except that the charge transporting layer coating solution was prepared using a comparative compound listed in Table 1 as the compound represented by the formula (1) without using hydroquinone monomethyl ether.

**Table 1**

| Example | Example compound | Comparative Example | Comparative compound |
|---|---|---|---|
| Example 1 | 1A-1 | Comparative Example 1 | R-1 |
| Example 2 | 1A-2 | Comparative Example 2 | R-2 |
| Example 3 | 1A-4 | Comparative Example 3 | R-3 |
| Example 4 | 1A-5 | Comparative Example 4 | R-4 |
| Example 5 | 1A-7 | Comparative Example 5 | R-5 |
| Example 6 | 1A-1/1A-2 | Comparative Example 6 | R-6 |
| Example 7 | 1A-8 | Comparative Example 7 | R-7 |
| Example 8 | 1A-12 | Comparative Example 8 | R-8 |
| Example 9 | 1B-1 | Comparative Example 9 | R-9 |
| Example 10 | A-1 | Comparative Example 10 | R-10 |
| Example 11 | 1A-2 | Comparative Example 11 | R-11 |
| Example 12 | 1A-1 | Comparative Example 12 | R-12 |
| Example 13 | 1A-2 | Comparative Example 13 | R-13 |
| Example 14 | 1A-1 | Comparative Example 14 | R-14 |
| Example 15 | 1A-2 | Comparative Example 15 | R-15 |
| Example 16 | 1A-1 | Comparative Example 16 | R-11 |
| Example 17 | 1A-1 | Comparative Example 17 | R-12 |
| Example 18 | 1A-1 | Comparative Example 18 | R-11 |
| Example 19 | 1A-2 | Comparative Example 19 | R-12 |
| Example 20 | 1A-1 | Comparative Example 20 | R-11 |
| Example 21 | 1A-2 | Comparative Example 21 | R-12 |
| Example 22 | 1A-1 | Comparative Example 22 | R-11 |
| Example 23 | 1A-2 | Comparative Example 23 | R-12 |
| Example 24 | 1A-1 | Comparative Example 24 | R-11 |
| Example 25 | 1A-2 | Comparative Example 25 | R-12 |
| Example 26 | 1A-1 | Comparative Example 26 | R-11 |
| Example 27 | 1A-2 | Comparative Example 27 | R-12 |
| Example 28 | 1A-1 | Comparative Example 28 | R-11 |
| Example 29 | 1A-2 | Comparative Example 29 | R-12 |
| Example 30 | 1A-1 | | |
| Example 31 | 1A-2 | | |
| Comparative Example 32 | 1A-1 | | |
| Comparative Example 33 | 1A-2 | | |
| Example 34 | 1A-1 | | |

### Evaluation of electrophotographic photosensitive member

The electrophotographic photosensitive members of Examples 1 to 31, 34 and Comparative Examples 1 to 29, 32 and 33 were evaluated as follows.

The percentage of a residual chain-polymerizable functional group was determined as follows.

A portion of a surface layer 179 mm away from one end of each of the produced electrophotographic photosensitive members was removed with a razor. The portion of the surface layer was subjected to a Fourier transform infrared attenuated total reflection spectroscopic study to determine the IR peak ratio of a residual chain-polymerizable functional group (methacryloyloxy group or acryloyloxy group) that was not involved in the polymerization reaction. Spectrum One FT-IR Spectrometer manufactured by Perkin Elmer Instruments was used as a Fourier transform infrared spectrophotometer. The peak area assigned to the in-plane bending vibration of a terminal olefin (CH₂=) of the methacryloyloxy group was determined at wave numbers of 1394 cm⁻¹ or more and 1413 cm⁻¹ or less. The peak area assigned to the stretching vibration of carbonyl (C=O) of the methacryloyloxy group was determined at wave numbers of 1689 cm⁻¹ or more and 1759 cm⁻¹ or less. The ratio of the peak area of the olefin to the peak area of the carbonyl was calculated as the IR peak ratio of the residual chain-polymerizable functional group. The peak area assigned to the in-plane bending vibration of a terminal olefin (CH₂=) of the acryloyloxy group was determined at wave numbers of 1400 cm⁻¹ or more and 1413 cm⁻¹ or less. The peak area assigned to the stretching vibration of carbonyl (C=O) of the acryloyloxy group was determined at wave numbers of 1699 cm⁻¹ or more and 1769 cm⁻¹ or less. The ratio of the peak area of the olefin to the peak area of the carbonyl was calculated as the IR peak ratio of the residual chain-polymerizable functional group. Tables 2 and 3 show the results.

The residual potential of the electrophotographic photosensitive member was evaluated as follows.

Each of the produced electrophotographic photosensitive members was attached to a drum test machine CYNTHIA 59 manufactured by Gen-Tech, Inc. The initial residual potential and the residual potential after 1000 revolutions of the electrophotographic photosensitive member were measured. The surface of the electrophotographic photosensitive member was charged with a scorotron corona charger. The primary current was set at 150 µA. The grid voltage was set such that the voltage applied to the surface of the electrophotographic photosensitive member was -750 V. A halogen lamp was used as a pre-exposure light source. The wavelength of pre-exposure light was determined using a 676-nm interference filter such that the light amount of the pre-exposure light was five times the light amount in which the light area potential was -200 V. The rotation speed was 0.20 seconds per revolution. The evaluation was performed at a temperature of 30°C and a humidity of 80%. Tables 2 and 3 show the results.

**Table 2**

| | Percentage of residual chain-polymerizable functional group | Evaluation of residual potential of photosensitive member | |
|---|---|---|---|
| | | Initial residual potential | Residual potential after 1000 revolutions |
| Example 1 | 0.003 | 15 | 65 |
| Example 2 | 0.003 | 15 | 65 |
| Example 3 | 0.003 | 15 | 65 |
| Example 4 | 0.003 | 15 | 65 |
| Example 5 | 0.003 | 15 | 65 |
| Example 6 | 0.003 | 15 | 65 |
| Example 7 | 0.003 | 15 | 65 |
| Example 8 | 0.003 | 15 | 65 |
| Example 9 | 0.005 | 20 | 70 |
| Example 10 | 0.008 | 15 | 70 |
| Example 11 | 0.008 | 15 | 70 |
| Example 12 | 0.010 | 20 | 70 |
| Example 13 | 0.010 | 20 | 70 |
| Example 14 | 0.002 | 15 | 60 |
| Example 15 | 0.002 | 15 | 60 |
| Example 16 | 0.002 | 10 | 60 |
| Example 17 | 0.002 | 10 | 60 |
| Example 18 | 0.002 | 15 | 65 |
| Example 19 | 0.002 | 10 | 60 |
| Example 20 | 0.003 | 15 | 50 |
| Example 21 | 0.003 | 15 | 50 |
| Example 22 | 0.003 | 15 | 50 |
| Example 23 | 0.003 | 15 | 50 |
| Example 24 | 0.002 | 15 | 50 |
| Example 25 | 0.002 | 15 | 50 |
| Example 26 | 0.010 | 25 | 75 |
| Example 27 | 0.010 | 25 | 75 |
| Example 28 | 0.002 | 7 | 57 |
| Example 29 | 0.002 | 7 | 57 |
| Example 30 | 0.008 | 25 | 75 |
| Example 31 | 0.008 | 25 | 75 |
| Comparative Example 32 | 0.002 | 20 | 70 |
| Comparative Example 33 | 0.002 | 20 | 70 |
| Example 34 | 0.006 | 35 | 85 |

**Table 3**

| | Percentage of residual chain-polymerizable functional group | Evaluation of residual potential of photosensitive member | |
|---|---|---|---|
| | | Initial residual potential | Residual potential after 1000 revolutions |
| Comparative Example 1 | 0.003 | 60 | 120 |
| Comparative Example 2 | 0.003 | 55 | 120 |
| Comparative Example 3 | 0.020 | 70 | 135 |
| Comparative Example 4 | 0.020 | 70 | 135 |
| Comparative Example 5 | 0.017 | 75 | 140 |
| Comparative Example 6 | 0.020 | 80 | 145 |
| Comparative Example 7 | 0.020 | 70 | 135 |
| Comparative Example 8 | 0.015 | 65 | 130 |
| Comparative Example 9 | 0.015 | 65 | 130 |
| Comparative Example 10 | 0.020 | 60 | 125 |
| Comparative Example 11 | 0.020 | 65 | 125 |
| Comparative Example 12 | 0.012 | 60 | 120 |
| Comparative Example 13 | 0.010 | 55 | 135 |
| Comparative Example 14 | 0.028 | 75 | 135 |
| Comparative Example 15 | 0.030 | 75 | 135 |
| Comparative Example 16 | 0.023 | 65 | 130 |
| Comparative Example 17 | 0.015 | 60 | 125 |
| Comparative Example 18 | 0.025 | 70 | 130 |
| Comparative Example 19 | 0.018 | 65 | 125 |
| Comparative Example 20 | 0.018 | 65 | 120 |
| Comparative Example 21 | 0.010 | 60 | 115 |
| Comparative Example 22 | 0.018 | 60 | 120 |
| Comparative Example 23 | 0.010 | 55 | 115 |
| Comparative Example 24 | 0.020 | 65 | 110 |
| Comparative Example 25 | 0.012 | 60 | 105 |
| Comparative Example 26 | 0.020 | 75 | 135 |
| Comparative Example 27 | 0.012 | 70 | 130 |
| Comparative Example 28 | 0.018 | 80 | 140 |
| Comparative Example 29 | 0.011 | 75 | 135 |

While the present invention has been described with reference to exemplary embodiments, it is to be understood that the invention is not limited to the disclosed exemplary embodiments.

## Claims

1. An electrophotographic photosensitive member, comprising:
a support; and
a photosensitive layer formed on the support,
wherein a surface layer of the electrophotographic photosensitive member comprises a polymer obtainable by polymerization of a compound represented by the following formula (1); and 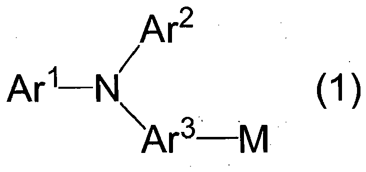 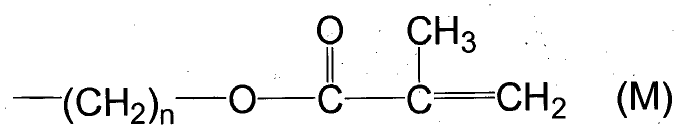
wherein, in the formula (1),
Ar¹ and Ar² each independently represents a substituted phenyl group,
Ar³ represents an unsubstituted or substituted phenylene group,
M is a group represented by formula (M) above and, in the formula (M), n represents 3 or 4, and
a substituent group of the substituted phenyl group and a substituent group of the substituted phenylene group are each independently a methyl group, an ethyl group, a n-propyl group, a methoxy group, an ethoxy group, or a propoxy group, wherein the surface layer further comprises a quinone derivative, the quinone derivative being at least one compound selected from the group consisting of:
a compound represented by the following formula (G), and
a compound represented by the following formula (H),
wherein the content of the quinone derivative in the surface layer is not less than 5 ppm and not more than 1500 ppm relative to the total mass of the polymer; 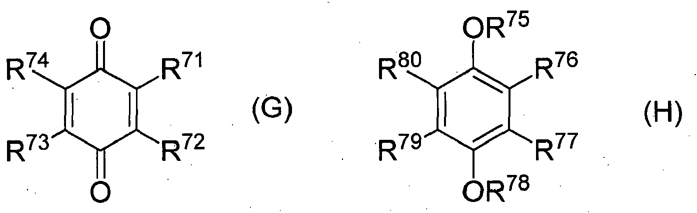
wherein, in the formulae (G) and (H),
R⁷¹ to R⁷⁴, R⁷⁶, R⁷⁷, R⁷⁹, and R⁸⁰ each independently represents a hydrogen atom, a hydroxy group, an unsubstituted or substituted alkyl group, an unsubstituted or substituted aryl group, or an unsubstituted or substituted alkoxy group,
at least one of R⁷¹ and R⁷⁴ is a hydrogen atom, a methyl group, or a hydroxy group,
at least one of R⁷² and R⁷³ is a hydrogen atom, a methyl group, or a hydroxy group,
at least one of R⁷⁶ and R⁸⁰ is a hydrogen atom, a methyl group, or a hydroxy group,
at least one of R⁷⁷ and R⁷⁹ is a hydrogen atom, a methyl group, or a hydroxy group,
R⁷⁵ and R⁷⁸ each independently represents a hydrogen atom, an unsubstituted or substituted alkyl group, or an unsubstituted or substituted aryl group, and
at least one of R⁷⁵ and R⁷⁸ is a hydrogen atom.

2. The electrophotographic photosensitive member according to claim 1,
wherein the polymer is obtainable by polymerization of a composition comprising:
the compound represented by the formula (1), and
a compound which includes two or more methacryloyloxy groups and does not include a charge transporting structure.

3. The electrophotographic photosensitive member according to claim 2,
wherein the compound which includes two or more methacryloyloxy groups and does not include a charge transporting structure is a compound represented by formula (A) below; and 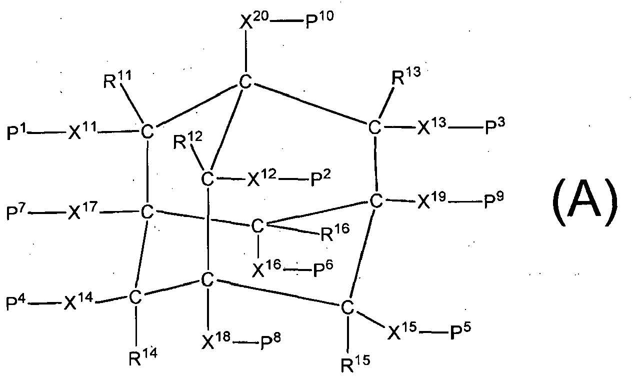 wherein, in the formula (A),
R¹¹ to R¹⁶ each independently represents a hydrogen atom, a methyl group, an ethyl group, a n-propyl group, a trifluoromethyl group, a hydroxy group, a methoxy group, an ethoxy group, an amino group, a dimethylamino group, a trimethylsilyl group, a fluorine atom, a chlorine atom, or a bromine atom,
X¹¹ to X²⁰ each independently represents a single bond or an alkylene group,
P¹ to P¹⁰ each independently represents a hydrogen atom, a methyl group, an ethyl group, a n-propyl group, a trifluoromethyl group, a hydroxy group, a methoxy group, an ethoxy group, an amino group, a dimethylamino group, a trimethylsilyl group, a fluorine atom, a chlorine atom, a bromine atom, or a methacryloyloxy group,
at least one of P¹ to P¹⁰ is a methacryloyloxy group, however, when X¹¹ is a single bond, P¹ and R¹¹ may combine to form an oxo group (=O), when X¹² is a single bond, P² and R¹² may combine to form an oxo group (=O), when X¹³ is a single bond, P³ and R¹³ may combine to form an oxo group (=O), when X¹⁴ is a single bond, P⁴ and R¹⁴ may combine to form an oxo group (=O), when X¹⁵ is a single bond, P⁵ and R¹⁵ may combine to form an oxo group (=O), and, when X¹⁶ is a single bond, P⁶ and R¹⁶ may combine to form an oxo group (=O), and
R¹¹ is a hydrogen atom when P¹ is a methacryloyloxy group, R¹² is a hydrogen atom when P² is a methacryloyloxy group, R¹³ is a hydrogen atom when P³ is a methacryloyloxy group, R¹⁴ is a hydrogen atom when P⁴ is a methacryloyloxy group, R¹⁵ is a hydrogen atom when P⁵ is a methacryloyloxy group, and R¹⁶ is a hydrogen atom when P⁶ is a methacryloyloxy group, wherein, in the formula (A), at least two of P¹ to P¹⁰ are methacryloyloxy groups.

4. The electrophotographic photosensitive member according to claim 2,
wherein the compound which includes two or more methacryloyloxy groups and does not include a charge transporting structure is at least one compound selected from the group consisting of a compound represented by the following formula (B) and a compound represented by the following formula (C); and 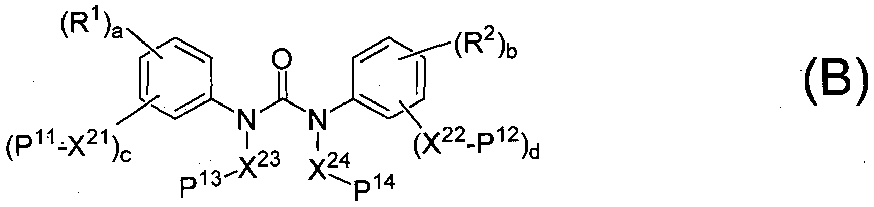 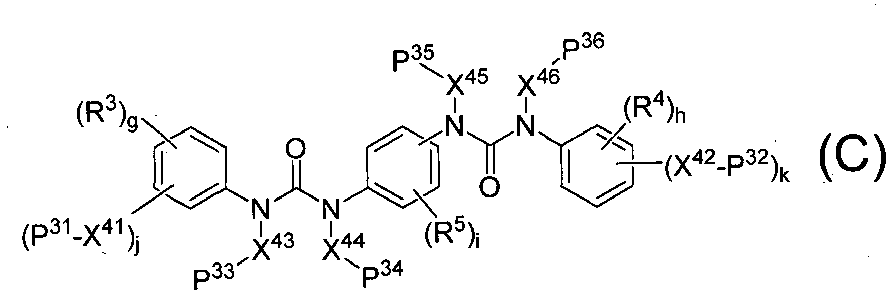 wherein, in the formulae (B) and (C),
R¹ to R⁵ each independently represents a methyl group, an ethyl group, a n-propyl group, a methoxymethyl group, a trifluoromethyl group, a trichloromethyl group, a methoxy group, an ethoxy group, a propoxy group, a methoxymethoxy group, a trifluoromethoxy group, a trichloromethoxy group, a dimethylamimo group, or a fluorine atom,
X²¹ to X²⁴ and X⁴¹ to X⁴⁶ each independently represents an alkylene group,
P¹¹ to P¹⁴ and P³¹ to P³⁶ each independently represents a hydrogen atom or a methacryloyloxy group,
at least two of P¹¹ to P¹⁴ are methacryloyloxy groups,
at least two of P³¹ to P³⁶ are methacryloyloxy groups, a, b, g, and h each independently represents an integer number selected from 0 to 5,
i represents an integer number selected from 0 to 4, and
c, d, j, and k each independently represents 0 or 1.

5. The electrophotographic photosensitive member according to any one of claims 1 to 4,
wherein the surface layer further comprises at least one compound selected from the group consisting of a compound represented by the following formula (D), a compound represented by the following formula (E), and a compound represented by the following formula (F); and 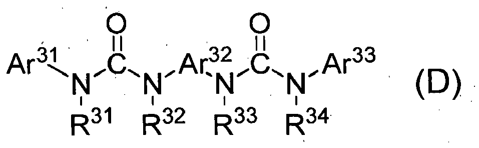 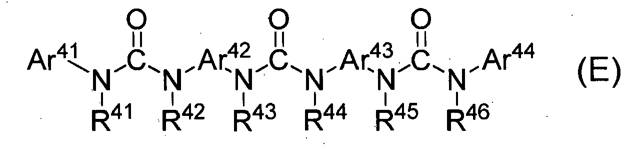 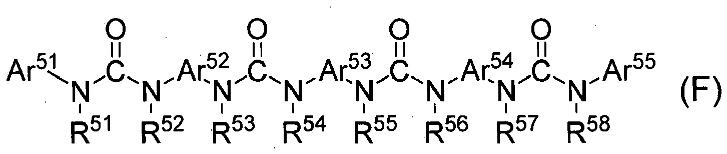 wherein, in the formulae (D), (E) and (F),
R³¹ to R³⁴, R⁴¹ to R⁴⁶, and R⁵¹ to R⁵⁸ each independently represents an alkyl group,
Ar³², Ar⁴² and Ar⁴³, and Ar⁵² to Ar⁵⁴ each independently represents an unsubstituted or substituted arylene group,
Ar³¹, Ar³³, Ar⁴¹, Ar⁴⁴, Ar⁵¹, and Ar⁵⁵ each independently represents an unsubstituted or substituted aryl group or a condensed ring,
a substituent group of the substituted arylene group is an alkyl group, an alkoxy-substituted alkyl group, a halogen-substituted alkyl group, an alkoxy group, an alkoxy-substituted alkoxy group, a halogen-substituted alkoxy group, or a halogen atom, and
a substituent group of the substituted aryl group is a carboxyl group, a cyano group, a dialkylamino group, a hydroxy group, an alkyl group, an alkoxy-substituted alkyl group, a halogen-substituted alkyl group, an alkoxy group, an alkoxy-substituted alkoxy group, a halogen-substituted alkoxy group, a nitro group, or a halogen atom.

6. The electrophotographic photosensitive member according to claim 1,
wherein the compound represented by the formula (H) is hydroquinone monomethyl ether.

7. A method of producing the electrophotographic photosensitive member according to any one of claims 1 to 6,
wherein the method comprises the following steps of:
forming a coat for the surface layer by using a surface layer coating solution comprising the compound represented by the formula (1), and
forming the surface layer by polymerization of the compound represented by the formula (1) in the coat.

8. The method according to claim 7,
wherein the polymerization of the compound represented by the formula (1) is effected by irradiating the coat with an electron beam.

9. A process cartridge detachably attachable to a main body of an electrophotographic apparatus, wherein the process cartridge integrally supports:
the electrophotographic photosensitive member (1) according to any one of claims 1 to 6, and
at least one means selected from the group consisting of charging means (3), developing means (5), transferring means (6), and cleaning means (9).

10. An electrophotographic apparatus comprising:
the electrophotographic photosensitive member (1) according to any one of claims 1 to 6;
charging means (3);
exposure means;
developing means (5); and
transferring means (6).

## Patentansprüche

1. Elektrophotographisches lichtempfindliches Element umfassend:
einen Träger; und
eine auf dem Träger gebildete lichtempfindliche Schicht,
wobei eine Oberflächenschicht des elektrophotographischen lichtempfindlichen Elements ein Polymer umfasst, das durch Polymerisation einer Verbindung dargestellt durch die folgende Formel (1) erhältlich ist; und 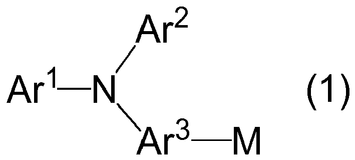 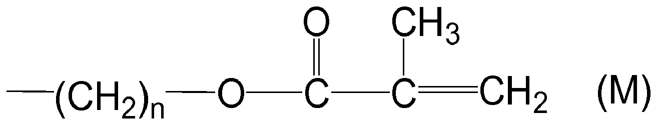
wobei in der Formel (1),
Ar¹ und Ar² jeweils unabhängig eine substituierte Phenylgruppe darstellen,
Ar³ eine unsubstituierte oder substituierte Phenylengruppe darstellt,
M eine durch die obige Formel (M) dargestellte Gruppe ist und, in der Formel (M), n 3 oder 4 darstellt, und
eine Substituentengruppe der substituierten Phenylgruppe und eine Substituentengruppe der substituierten Phenylengruppe sind jeweils unabhängig eine Methylgruppe, eine Ethylgruppe, eine n-Propylgruppe, eine Methoxygruppe, eine Ethoxygruppe oder eine Propoxygruppe, wobei die Oberflächenschicht ferner ein Chinonderivat umfasst, wobei das Chinonderivat wenigstens eine Verbindung ist, die ausgewählt ist aus der Gruppe bestehend aus:
einer Verbindung dargestellt durch die folgende Formel (G), und
einer Verbindung dargestellt durch die folgende Formel (H),
wobei der Gehalt des Chinonderivats in der Oberflächenschicht nicht weniger als 5 ppm und nicht mehr als 1500 ppm relativ zu der Gesamtmasse des Polymers ist; 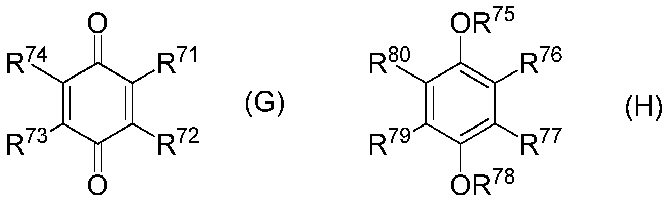
wobei in den Formeln (G) und (H),
R⁷¹ bis R⁷⁴, R⁷⁶, R⁷⁷, R⁷⁹ und R⁸⁰ jeweils unabhängig ein Wasserstoffatom, eine Hydroxygruppe, eine unsubstituierte oder substituierte Alkylgruppe, eine unsubstituierte oder substituierte Arylgruppe oder eine unsubstituierte oder substituierte Alkoxygruppe darstellen,
wenigstens eines von R⁷¹ und R⁷⁴ ein Wasserstoffatom, eine Methylgruppe oder eine Hydroxygruppe ist,
wenigstens eines von R⁷² und R⁷³ ein Wasserstoffatom, eine Methylgruppe oder eine Hydroxygruppe ist,
wenigstens eines von R⁷⁶ und R⁸⁰ ein Wasserstoffatom, eine Methylgruppe oder eine Hydroxygruppe ist,
wenigstens eines von R⁷⁷ und R⁷⁹ ein Wasserstoffatom, eine Methylgruppe oder eine Hydroxygruppe ist,
R⁷⁵ und R⁷⁸ jeweils unabhängig ein Wasserstoffatom, eine unsubstituierte oder substituierte Alkylgruppe oder eine unsubstituierte oder substituierte Arylgruppe darstellen, und
wenigstens eines von R⁷⁵ und R⁷⁸ ein Wasserstoffatom ist.

2. Elektrophotographisches lichtempfindliches Element nach Anspruch 1, wobei das Polymer durch Polymerisation einer Zusammensetzung erhältlich ist, die umfasst:
die durch die Formel (1) dargestellte Verbindung, und
eine Verbindung, welche zwei oder mehrere Methacryloyloxygruppen beinhaltet und keine Ladungstransportstruktur beinhaltet.

3. Elektrophotographisches lichtempfindliches Element nach Anspruch 2,
wobei die Verbindung, welche zwei oder mehrere Methacryloyloxygruppen beinhaltet und keine Ladungstransportstruktur beinhaltet, eine durch die folgende Formel (A) dargestellte Verbindung ist; und 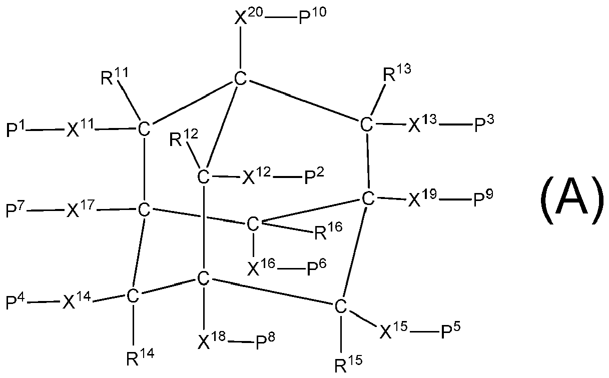 wobei, in der Formel (A),
R¹¹ bis R¹⁶ jeweils unabhängig ein Wasserstoffatom, eine Methylgruppe, eine Ethylgruppe, eine n-Propylgruppe, eine Trifluormethylgruppe, eine Hydroxygruppe, eine Methoxygruppe, eine Ethoxygruppe, eine Aminogruppe, eine Dimethylaminogruppe, Trimethylsilylgruppe, ein Fluoratom, ein Chloratom oder ein Bromatom darstellen,
X¹¹ bis X²⁰ jeweils unabhängig eine Einfachbindung oder eine Alkylengruppe darstellen,
P¹ bis P¹⁰ jeweils unabhängig ein Wasserstoffatom, eine Methylgruppe, eine Ethylgruppe, eine n-Propylgruppe, eine Trifluormethylgruppe, eine Hydroxygruppe, eine Methoxygruppe, eine Ethoxygruppe, eine Aminogruppe, eine Dimethylaminogruppe, eine Trimethylsilylgruppe, ein Fluoratom, ein Chloratom, ein Bromatom oder eine Methacryloyloxygruppe darstellen,
wenigstens eines von P¹ bis P¹⁰ eine Methacryloyloxygruppe ist, jedoch, wenn X¹¹ eine Einfachbindung ist, können sich P¹ und R¹¹ kombinieren, um eine Oxogruppe (=O) zu bilden, wenn X¹² eine Einfachbindung ist, können sich P² und R¹² kombinieren, um eine Oxogruppe (=O) zu bilden, wenn X¹³ eine Einfachbindung ist, können sich P³ und R¹³ kombinieren, um eine Oxogruppe (=O) zu bilden, wenn X¹⁴ eine Einfachbindung ist, können sich P⁴ und R¹⁴ kombinieren, um eine Oxogruppe (=O) zu bilden, wenn X¹⁵ eine Einfachbindung ist, können sich P⁵ und R¹⁵ kombinieren, um eine Oxogruppe (=O) zu bilden, und, wenn X¹⁶ eine Einfachbindung ist, können sich P⁶ und R¹⁶ kombinieren, um eine Oxogruppe (=O) zu bilden, und
R¹¹ ein Wasserstoffatom ist, wenn P¹ eine Methacryloyloxygruppe ist, R¹² ein Wasserstoffatom ist, wenn P² eine Methacryloyloxygruppe ist, R¹³ ein Wasserstoffatom ist, wenn P³ eine Methacryloyloxygruppe ist, R¹⁴ ein Wasserstoffatom ist, wenn P⁴ eine Methacryloyloxygruppe ist, R¹⁵ ein Wasserstoffatom ist, wenn P⁵ eine Methacryloyloxygruppe ist, und R¹⁶ ein Wasserstoffatom ist, wenn P⁶ eine Methacryloyloxygruppe ist, wobei, in der Formel (A), wenigstens zwei von P¹ bis P¹⁰ Methacryloyloxygruppen sind.

4. Elektrophotographisches lichtempfindliches Element nach Anspruch 2,
wobei die Verbindung, welche zwei oder mehrere Methacryloyloxygruppen beinhaltet und keine Ladungstransportstruktur beinhaltet, wenigstens eine Verbindung ausgewählt aus der Gruppe bestehend aus einer Verbindung dargestellt durch die folgende Formel (B) und einer Verbindung dargestellt durch die folgende Formel (C) ist; und 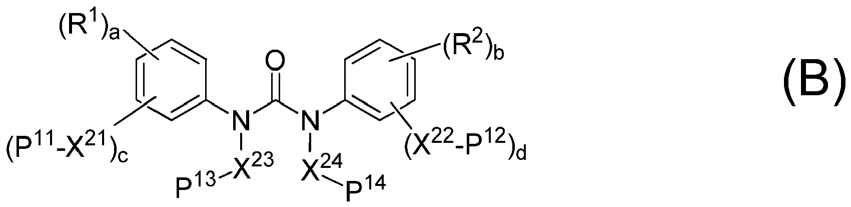 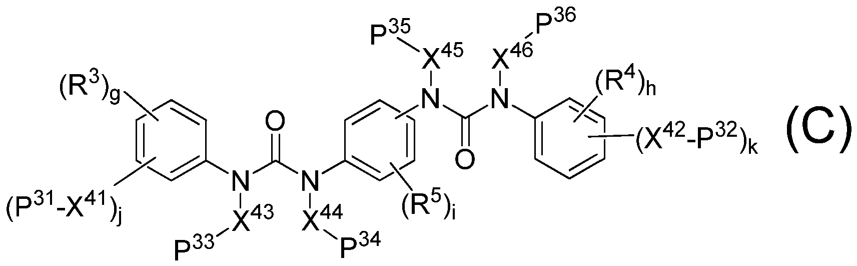 wobei in den Formeln (B) und (C),
R¹ bis R⁵ jeweils unabhängig eine Methylgruppe, eine Ethylgruppe, eine n-Propylgruppe, eine Methoxymethylgruppe, eine Trifluormethylgruppe, eine Trichlormethylgruppe, eine Methoxygruppe, eine Ethoxygruppe, eine Propoxygruppe, eine Methoxymethoxygruppe, eine Trifluormethoxygruppe, eine Trichlormethoxygruppe, eine Dimethylamimogruppe oder ein Fluoratom darstellen
X²¹ bis X²⁴ und X⁴¹ bis X⁴⁶ jeweils unabhängig eine Alkylengruppe darstellen,
P¹¹ bis P¹⁴ und P³¹ bis P³⁶ jeweils unabhängig ein Wasserstoffatom oder eine Methacryloyloxygruppe darstellen,
wenigstens zwei von P¹¹ bis P¹⁴ Methacryloyloxygruppen sind, wenigstens zwei von P³¹ bis P³⁶ Methacryloyloxygruppen sind, a, b, g, und h jeweils unabhängig eine ganze Zahl ausgewählt von 0 bis 5 darstellen,
i eine ganze Zahl ausgewählt von 0 bis 4 darstellt, und
c, d, j, und k jeweils unabhängig 0 oder 1 darstellen.

5. Elektrophotographisches lichtempfindliches Element nach einem der Ansprüche 1 bis 4,
wobei die Oberflächenschicht ferner wenigstens eine Verbindung ausgewählt aus der Gruppe bestehend aus einer Verbindung dargestellt durch die folgende Formel (D), einer Verbindung dargestellt durch die folgende Formel (E) und einer Verbindung dargestellt durch die folgende Formel (F) umfasst; und 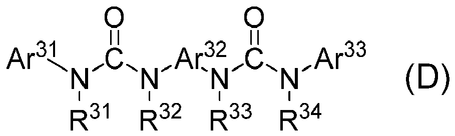 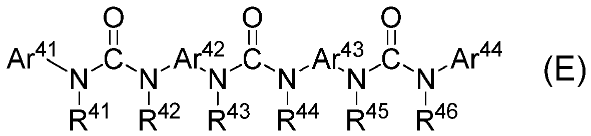 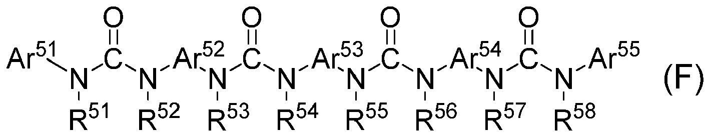 wobei in den Formeln (D), (E) und (F),
R³¹ bis R³⁴, R⁴¹ bis R⁴⁶, und R⁵¹ bis R⁵⁸ jeweils unabhängig eine Alkylgruppe darstellen,
Ar³², Ar⁴² und Ar⁴³, und Ar⁵² bis Ar⁵⁴ jeweils unabhängig eine unsubstituierte oder substituierte Arylengruppe darstellen,
Ar³¹, Ar³³, Ar⁴¹, Ar⁴⁴, Ar⁵¹, und Ar⁵⁵ jeweils unabhängig eine unsubstituierte oder substituierte Arylgruppe oder einen kondensierten Ring darstellen,
eine Substituentengruppe der substituierten Arylengruppe eine Alkylgruppe, eine Alkoxy-substituierte Alkylgruppe, eine Halogen-substituierte Alkylgruppe, eine Alkoxygruppe, eine Alkoxy-substituierte Alkoxygruppe, eine Halogen-substituierte Alkoxygruppe oder ein Halogenatom ist, und
eine Substituentengruppe der substituierten Arylgruppe eine Carboxylgruppe, eine Cyangruppe, eine Dialkylaminogruppe, eine Hydroxygruppe, eine Alkylgruppe, eine Alkoxy-substituierte Alkylgruppe, eine Halogen-substituierte Alkylgruppe, eine Alkoxygruppe, eine Alkoxy-substituierte Alkoxygruppe, eine Halogen-substituierte Alkoxygruppe, eine Nitrogruppe oder ein Halogenatom ist.

6. Elektrophotographisches lichtempfindliches Element nach Anspruch 1,
wobei die durch die Formel (H) dargestellte Verbindung Hydrochinonmonomethylether ist.

7. Verfahren für die Herstellung des elektrophotographischen lichtempfindlichen Elements nach einem der Ansprüche 1 bis 6,
wobei das Verfahren die folgenden Schritte umfasst:
Bilden eines Überzugs für die Oberflächenschicht durch Verwendung einer Oberflächenschichtüberzugslösung umfassend die Verbindung dargestellt durch die Formel (1), und
Bilden der Oberflächenschicht durch Polymerisation der Verbindung dargestellt durch die Formel (1) in dem Überzug.

8. Verfahren nach Anspruch 7,
wobei die Polymerisation der Verbindung dargestellt durch die Formel (1) durch Bestrahlung des Überzugs mit einem Elektronenstrahl erfolgt.

9. Prozesskartusche, die abnehmbar an einen Hauptkörper eines elektrophotographischen Geräts befestigt werden kann, wobei die Prozesskartusche integral trägt:
das elektrophotographische lichtempfindliche Element (1) gemäß einem der Ansprüche 1 bis 6, und
wenigstens eine Einrichtung ausgewählt aus der Gruppe bestehend aus einer Ladungseinrichtung (3), einer Entwicklungseinrichtung (5), einer Transfereinrichtung (6) und einer Reinigungseinrichtung (9).

10. Elektrophotographisches Gerät umfassend:
das elektrophotographische lichtempfindliche Element (1) gemäß einem der Ansprüche 1 bis 6;
eine Ladungseinrichtung (3);
eine Expositionseinrichtung eine Entwicklungseinrichtung (5); und eine Transfereinrichtung (6).

## Revendications

1. Elément photosensible électrophotographique, comprenant :
un support : et
une couche photosensible formée sur le support,
une couche de surface de l'élément photosensible électrophotographique comprenant un polymère pouvant être obtenu par polymérisation d'un composé représenté par la formule (1) suivante ; et 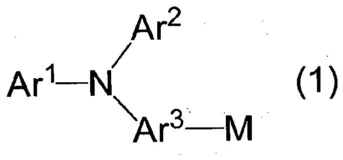 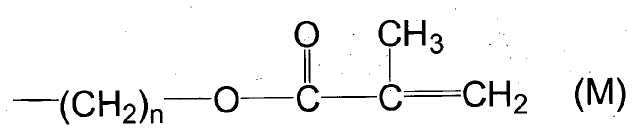
où, dans la formule (1),
Ar¹ et Ar² représentent chacun indépendamment un groupe phényle substitué,
Ar³ représente un groupe phénylène substitué ou non substitué,
M est un groupe représenté par la formule (M) ci-dessus et, dans la formule (M), n est égal à 3 ou 4, et
un groupe servant de substituant du groupe phényle substitué et un groupe servant de substituant du groupe phénylène substitué représentent chacun indépendamment un groupe méthyle, un groupe éthyle, un groupe n-propyle, un groupe méthoxy, un groupe éthoxy ou un groupe propoxy, la couche de surface comprenant en outre un dérivé de quinone, le dérivé de quinone étant au moins un composé choisi dans le groupe consistant en :
un composé représenté par la formule (G) suivante, et
un composé représenté par la formule (H) suivante,
la quantité du dérivé de quinone dans la couche de surface étant non inférieure à 5 ppm et non supérieure à 1500 ppm par rapport à la masse totale du polymère ; 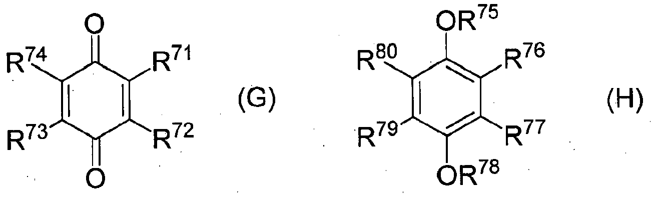 où, dans les formules (G) et (H),
R⁷¹ à R⁷⁴, R⁷⁶, R⁷⁷, R⁷⁹ et R⁸⁰ représentent chacun indépendamment un atome d'hydrogène, un groupe hydroxy, un groupe alkyle non substitué ou substitué, un groupe aryle non substitué ou substitué ou un groupe alkoxy non substitué ou substitué,
au moins un de R⁷¹ et R⁷⁴ représente un atome d'hydrogène, un groupe méthyle ou un groupe hydroxy,
au moins un de R⁷² et R⁷³ représente un atome d'hydrogène, un groupe méthyle ou un groupe hydroxy,
au moins un de R⁷⁶ et R⁸⁰ représente un atome d'hydrogène, un groupe méthyle ou un groupe hydroxy,
au moins un de R⁷⁷ et R⁷⁹ représente un atome d'hydrogène, un groupe méthyle ou un groupe hydroxy,
R⁷⁵ et R⁷⁸ représentent chacun indépendamment un atome d'hydrogène, un groupe alkyle non substitué ou substitué ou un groupe aryle non substitué ou substitué, et
au moins un de R¹⁵ et R⁷⁸ représente un atome d'hydrogène.

2. Elément photosensible électrophotographique suivant la revendication 1,
dans lequel le polymère peut être obtenu par polymérisation d'une composition comprenant :
le composé représenté par la formule (1), et
un composé qui comprend deux ou plus de deux groupes méthacryloyloxy et qui ne comprend pas de structure de transport de charge.

3. Elément photosensible électrophotographique suivant la revendication 2,
dans lequel le composé qui comprend deux ou plus de deux groupes méthacryloyloxy et qui ne comprend pas de structure de transport de charge est un composé représenté par la formule (A) ci-dessous ; et 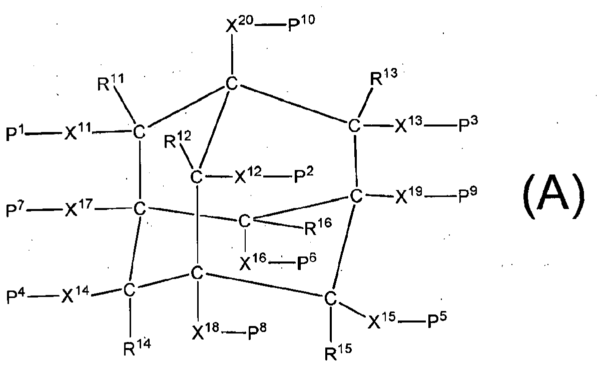 où, dans la formule (A),
R¹¹ à R¹⁶ représentent chacun indépendamment un atome d'hydrogène, un groupe méthyle, un groupe éthyle, un groupe n-propyle, un groupe trifluorométhyle, un groupe hydroxy, un groupe méthoxy, un groupe éthoxy, un groupe amino, un groupe diméthylamino, un groupe triméthylsilyle, un atome de fluor, un atome de chlore ou un atome de brome,
X¹¹ à X²⁰ représentent chacun indépendamment une liaison simple ou un groupe alkylène,
P¹ à P¹⁰ représentent chacun indépendamment un atome d'hydrogène, un groupe méthyle, un groupe éthyle, un groupe n-propyle, un groupe trifluorométhyle, un groupe hydroxy, un groupe méthoxy, un groupe éthoxy, un groupe amino, un groupe diméthylamino, un groupe triméthylsilyle, un atome de fluor, un atome de chlore, un atome de brome ou un groupe méthacryloyloxy,
au moins un de P¹ à P¹⁰ représente un groupe méthacryloyloxy,
cependant, lorsque X¹¹ représente une liaison simple, P¹ et R¹¹ peuvent se combiner pour former un groupe oxo (=O), lorsque X¹² représente une liaison simple, P² et R¹² peuvent se combiner pour former un groupe oxo (=0), lorsque X¹³ représente une liaison simple, P³ et R¹³ peuvent se combiner pour former un groupe oxo (=O), lorsque X¹⁴ représente une liaison simple, P⁴ et R¹⁴ peuvent se combiner pour former un groupe oxo (=0), lorsque X¹⁵ représente une liaison simple, P⁵ et R¹⁵ peuvent se combiner pour former un groupe oxo (=0) et, lorsque X¹⁶ représente une liaison simple, P⁶ et R¹⁶ peuvent se combiner pour former un groupe oxo (=O), et
R¹¹ représente un atome d'hydrogène lorsque P¹ représente un groupe méthacryloyloxy, R¹² représente un atome d'hydrogène lorsque P² représente un groupe méthacryloyloxy, R¹³ représente un atome d'hydrogène lorsque P³ représente un groupe méthacryloyloxy, R¹⁴ représente un atome d'hydrogène lorsque P⁴ représente un groupe méthacryloyloxy, R¹⁵ représente un atome d'hydrogène lorsque P⁵ représente un groupe méthacryloyloxy et R¹⁶ représente un atome d'hydrogène lorsque P⁶ représente un groupe méthacryloyloxy, où, dans la formule (A), au moins deux de P¹ à P¹⁰ représentent des groupes méthacryloyloxy.

4. Elément photosensible électrophotographique suivant la revendication 2,
dans lequel le composé qui comprend deux ou plus de deux groupes méthacryloyloxy et qui ne comprend pas de structure de transport de charge est au moins un composé choisi dans le groupe consistant en un composé représenté par la formule (B) suivante et un composé représenté par la formule (C) suivante ; et 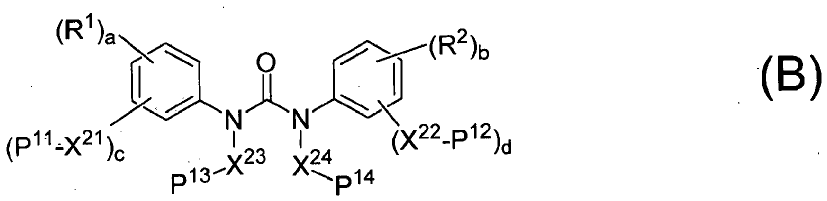 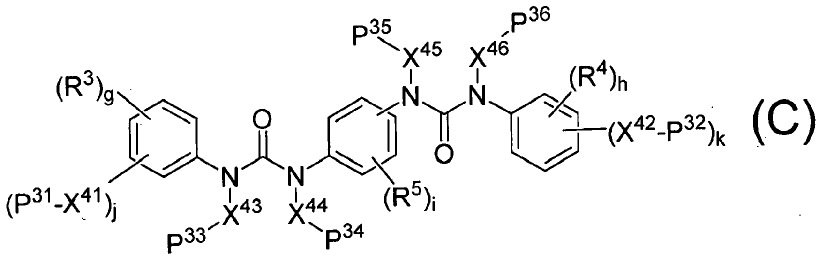 où, dans les formule (B) et (C),
R¹ à R⁵ représentent chacun indépendamment un groupe méthyle, un groupe éthyle, un groupe n-propyle, un groupe méthoxyméthyle, un groupe trifluorométhyle, un groupe trichlorométhyle, un groupe méthoxy, un groupe éthoxy, un groupe propoxy, un groupe méthoxyméthoxy, un groupe trifluorométhoxy, un groupe trichlorométhoxy, un groupe diméthylamino ou un atome de fluor,
X²¹ à X²⁴ et X⁴¹ à X⁴⁶ représentent chacun indépendamment un groupe alkylène,
P¹¹ à P¹⁴ et P³¹ à P³⁶ représentent chacun indépendamment un atome d'hydrogène ou un groupe méthacryloyloxy,
au moins deux de P¹¹ à P¹⁴ représentent des groupes méthacryloyloxy,
au moins deux de P³¹ à P³⁶ représentent des groupes méthacryloyloxy,
a, b, g et h représentent chacun indépendamment un nombre entier de 0 à 5,
i représente un nombre entier de 0 à 4, et
c, d, j et k sont chacun égaux indépendamment à 0 ou 1.

5. Elément photosensible électrophotographique suivant l'une quelconque des revendications 1 à 4,
dans lequel la couche de surface comprend en outre au moins un composé choisi dans le groupe consistant en un composé représenté par la formule (D) suivante, un composé représenté par la formule (E) suivante et un composé représenté par la formule (F) suivante ; et 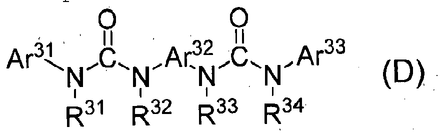 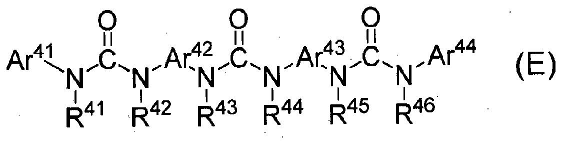 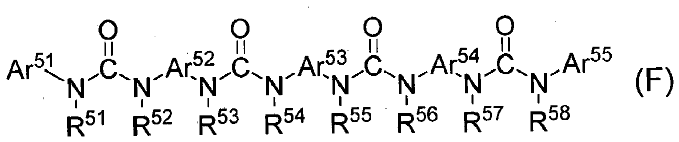 où, dans les formule (D), (E) et (F),
R³¹ à R³⁴, R⁴¹ à R⁴⁶ et R⁵¹ à R⁵⁸ représentent chacun indépendamment un groupe alkyle,
Ar³², Ar⁴² et Ar⁴³, et Ar⁵² à Ar⁵⁴ représentent chacun indépendamment un groupe arylène non substitué ou substitué,
Ar³¹, Ar³³, Ar⁴¹, Ar⁴⁴, Ar⁵¹ et Ar⁵⁵ représentent chacun indépendamment un groupe aryle non substitué ou substitué ou un noyau condensé,
un groupe servant de substituant du groupe arylène substitué est un groupe alkyle, un groupe alkyle à substituant alkoxy, un groupe alkyle à substituant halogéno, un groupe alkoxy, un groupe alkoxy à substituant alkoxy, un groupe alkoxy à substituant halogéno ou un atome d'halogène, et
un groupe servant de substituant du groupe aryle substitué est un groupe carboxyle, un groupe cyano, un groupe dialkylamino, un groupe hydroxy, un groupe alkyle, un groupe alkyle à substituant alkoxy, un groupe alkyle à substituant halogéno, un groupe alkoxy, un groupe alkoxy à substituant alkoxy, un groupe alkoxy à substituant halogéno, un groupe nitro ou un atome d'halogène.

6. Elément photosensible électrophotographique suivant la revendication 1,
dans lequel le composé représenté par la formule (H) est l'éther monométhylique d'hydroquinone.

7. Procédé de production de l'élément photosensible électrophotographique suivant l'une quelconque des revendications 1 à 6,
le procédé comprenant les étapes suivantes :
formation d'un revêtement pour couche de surface en utilisant une solution de revêtement pour couche de surface comprenant le composé représenté par la formule (1),
et
formation de la couche de surface par polymérisation du composé représenté par la formule (1) dans le revêtement.

8. Procédé suivant la revendication 7,
dans lequel la polymérisation du composé représenté par la formule (1) est effectuée par irradiation du revêtement avec un faisceau d'électrons.

9. Cartouche de traitement pouvant être montée de manière amovible dans le corps principal d'un appareil électrophotographique, ladite cartouche de traitement portant de manière intégrée :
l'élément photosensible électrophotographique (1) suivant l'une quelconque des revendications 1 à 6, et
au moins un moyen choisi dans le groupe consistant en un moyen de charge (3), un moyen de développement (5), un moyen de transfert (6) et un moyen de nettoyage (9).

10. Appareil électrophotographique comprenant :
l'élément photosensible électrophotographique (1) suivant l'une quelconque des revendications 1 à 6 ;
un moyen de charge (3) ;
un moyen d'exposition ;
un moyen de développement (5) ; et
un moyen de transfert (6).
